# EUROPEAN PATENT APPLICATION

(11) **EP 4 850 523 A1**
(43) Date of publication of application: **09.12.2026**
(21) Application number: 25749291.8
(22) Date of filing: 27.01.2025
(51) Int. Cl.: A01K 1/02, B60N 2/28

(54) **ANIMAL CARRYING DEVICE**

(30) Priority: 31.01.2024 CN 202410142589; 08.02.2024 CN 202410179001; 11.04.2024 CN 202410437167; 12.04.2024 CN 202410445176
(71) Applicant: Jani International Pte. Ltd., Singapore 569874 (SG)
(72) Inventor: CHEN, Yingzhong, Singapore 569874 (SG); GUO, Zhengwen, Singapore 569874 (SG); YU, Xiong, Singapore 569874 (SG); HE, Ziqiang, Singapore 569874 (SG); YANG, Qiang, Singapore 569874 (SG)
(74) Representative: Müller-Boré & Partner Patentanwälte PartG mbB
(86) International application number: PCT/SG2025/050065
(87) International publication number: WO 2025/165302

(57) **Abstract**

The present invention relates to an animal carrying device. The animal carrying device comprises: a body which has a first wall and a second wall, the second wall being provided with a second opening; and a blocking member which is provided with a protective structure. The blocking member is movably connected to the body, such that the blocking member can be switched between a first position and a second position; when the blocking member is located at the first position, the protective structure at least partially covers the first wall; and when the blocking member is located at the second position, the blocking member at least partially blocks the second opening of the second wall.

## Description

### RELATED APPLICATION

This application claims priority to Chinese Patent Application No. 2024101425892 filed on January 31, 2024; Chinese Patent Application No. 2024101790010 filed on February 8, 2024; Chinese Patent Application No. 202410437167.8 filed on April 11, 2024; and Chinese Patent Application No. 2024104451761 filed on April 12, 2024, the entire contents of which are incorporated herein by reference.

### TECHNICAL FIELD

The present invention relates to an animal carrying device.

### BACKGROUND

Carrying devices such as transport boxes can be used to carry pets. A transport box can be placed on a vehicle seat for easy portability during travel. Existing transport boxes typically have ventilation openings or light-transmitting openings to improve internal ventilation or light transmission. However, the impact resistance of box walls is generally poor, and when the box is subjected to an impact, the box cannot effectively protect a pet therein.

### SUMMARY

The present invention provides an animal carrying device that is comfortable and has high safety.

According to one aspect of the present application, an animal carrying device is provided. The animal carrying device includes a body and a shielding member. The body has a first wall, and a second wall having a second opening. The shielding member is provided with a protective structure and is movably connected to the body to allow the shielding member to switch between a first position and a second position. When the shielding member is in the first position, the protective structure covers at least part of the first wall. When the shielding member is in the second position, the shielding member covers at least part of the second opening of the second wall.

In one or more of the aspects above, the first wall is a side wall, the second wall is a top wall, and the second opening is a top wall opening. A ventilation mesh sheet is disposed on a wall of the animal carrying device, and particularly, the ventilation mesh sheet is disposed on the top opening of the animal carrying device, so that when a box is used outdoors, strong sunlight can shine directly into the box through the ventilation mesh sheet, which may reduce comfort of a pet inside the box. Conversely, when the animal carrying device is installed on a vehicle seat, the ventilation mesh sheet on the side wall may be blocked by a vehicle door, etc., thus resulting in insufficient light inside the animal carrying device and also reducing the comfort of the pet inside the box.

According to one aspect of the present application, when the animal carrying device is used outdoors, a top wall opening may be shield to prevent sunlight from shining an animal directly; and when the animal carrying device is used inside a vehicle, the top wall opening may be opened to enhance internal lighting of the animal carrying device, and the shielding member is placed on the side wall, thus improving the impact resistance of the animal carrying device, thereby effectively enhancing the comfort and the safety of the animal carrying device. According to another aspect of the present application, an animal carrying device is further provided. The animal carrying device includes: a body having a first wall and a second wall connected to the first wall, the first wall having a first opening and the second wall having a second opening; and a shielding member provided with a protective structure. The shielding member includes a fixed end and a free end. The fixed end is connected to the body at a position between the first opening and the second opening and serves as a pivot end to allow the shielding member to flip between the first position and the second position. When the shielding member is in the first position, the protective structure covers at least part of the first opening, and allows the second opening to be exposed. When the shielding member is in the second position, the shielding member covers at least part of the second opening and allows the first opening to be exposed.

In one or more of the aspects above, the first wall and the second wall are side walls opposite to each other, and the first wall and the second wall both have an opening. The shielding member is installed on either the first wall or the second wall to ensure ventilation through at least one opening in a corresponding side. However, the impact resistance of the side walls having openings is generally poor, thus making it difficult to effectively protect the pet inside the transport box during a collision of the animal carrying device. Therefore, when the animal carrying device is installed on a vehicle seat, by placing the shielding member on the side wall adjacent to a vehicle door while leaving the opening in the side away from the vehicle door for ventilation, the impact resistance of the side walls of the animal carrying device can be enhanced, thereby improving the safety and the comfort of the animal carrying device.

In one or more of the aspects above, the protective structure includes a first protective layer and a second protective layer stacked with the first protective layer. Elasticity of the material of the first protective layer is higher than elasticity of the material of the second protective layer. The shielding member is configured such that, when the shielding member is in the first position, the second protective layer is closer to the body than the first protective layer, and when the shielding member is in the second position, the first protective layer is closer to the body than the second protective layer.

According to yet another aspect of the present application, an animal carrying device is further provided. The animal carrying device includes a body and a shielding member. The body has a first wall and a second wall opposite to the first wall. The first wall has a first opening and the second wall has a second opening. The shielding member is provided with a protective structure and is detachably connected to the body to allow the shielding member to switch between a first position and a second position. When the shielding member is in the first position, the protective structure covers at least part of the first wall and allows the second opening to be exposed. When the shielding member is in the second position, the protective structure covers at least part of the second wall and allows the first opening to be exposed.

In one or more of the aspects above, the body is further provided with an anchoring assembly. The anchoring assembly is adapted to be connected to a vehicle seat to fix the animal carrying device to the vehicle seat. When the animal carrying device is fixed to the vehicle seat through the anchoring assembly, the first wall or the second wall is configured to be adjacent to a vehicle door.

In one or more of the aspects above, the protective structure includes a first protective layer and a second protective layer stacked with the first protective layer. Elasticity of the material of the first protective layer is higher than elasticity of the material of the second protective layer. The shielding member is configured such that, when the shielding member is in the first or second position, the second protective layer is closer to the body than the first protective layer. Optionally, the first protective layer is made of foam, and the second protective layer is a plate-like structure made of material selected from at least one of polyethylene (PE), expanded polypropylene (EPP), expanded polystyrene (EPS), or expanded polyolefin (EPO).

In one or more of the aspects above, the shielding member is further provided with a fixing member, and the first wall and the second wall each are provided with a matching member. The matching member is adapted to detachably connect with the fixing member to allow the shielding member to be attached to an outer surface of the first wall or second wall to cover the first opening or the second opening.

In one or more of the aspects above, the matching members on the first wall are disposed at both sides of the first opening, respectively, and the fixing members on the shielding member are disposed at two ends of the shielding member, respectively. The protective structure is configured to, when the shielding member is connected to the first wall through the fixing members, cover the first opening.

According to yet another aspect of the present application, an animal carrying device is provided. The animal carrying device includes a base, a body, and a first shielding member. The body is disposed on the base, and forms a carrying space together with the base. The top wall of the body is provided with a top wall viewing area. The first shielding member is provided with a first protective structure and is movably connected to the body, to allow the first shielding member to switch between a first position and a second position. When the first shielding member is in the first position, the first protective structure covers at least part of one of multiple side walls of the body. When the first shielding member is in the second position, the first shielding member covers at least part of the top wall viewing area. The multiple side walls of the body are connected to the top wall of the body, respectively.

According to the animal carrying device provided in this embodiment, through the first shielding member movably disposed on the body, a user can selectively keep the first shielding member in the second position or in the first position based on an actual environment. When the first shielding member is in the first position, the first protective structure on the first shielding member provides excellent protective buffering for the side walls of the animal carrying device. When the animal carrying device is taken outdoors, the first shielding member may be arranged to the second position, i.e., the first shielding member covers the top wall ventilation mesh sheet, thereby preventing a pet inside the animal carrying device from being exposed to sunlight, ensuring air circulation inside the animal carrying device, and also achieving effects of protective buffering. The animal carrying device in the embodiment achieves effects of both sunlight shielding and excellent protective buffering. Additionally, the movably arranged first shielding member is easy to be operated and less likely to be lost.

In one or more of the aspects above, one end of the first shielding member is connected to the body and serves as a first pivot end to allow the first shielding member to flip between the first position and the second position by rounding the first pivot end.

In one or more of the aspects above, the top wall viewing area includes a top wall opening and a top wall ventilation mesh sheet covering the top wall opening.

In one or more of the aspects above, one of the left side wall and the right side wall of the body has an opening, and the opening is covered with a ventilation mesh sheet. When the first shielding member is in the first position, the first protective structure covers at least the opening.

In one or more of the aspects above, the first shielding member includes a first shielding fabric cover, and the first protective structure is disposed inside the first shielding fabric cover. One end of the first shielding fabric cover is connected to the body and forms a first pivot end.

In one or more of the aspects above, the first protective structure includes a first protective layer and a second protective layer stacked with the first protective layer. The first protective layer has better elasticity than the second protective layer. The first shielding member has a first side surface and a second side surface opposite to each other. The second side surface is adapted to face one of multiple side walls of the body, and the second protective layer is farther from the first side surface than the first protective layer.

In one or more of the aspects above, the second protective layer is a plate-like structure, and the second protective layer is made of material selected from at least one of PE, EPP, EPS, or EPO. The first protective layer is made of foam.

In one or more of the aspects above, the first shielding member is an elastic member. and the first shielding member is adapted to be connected to the body or the base through a fixing mechanism to allow the first shielding member to be attached to the outer surface of the body.

In one or more of the aspects above, the fixing mechanism includes a first fixing member and a first matching member. The first fixing member is disposed on the first shielding member. The first matching member is disposed on the base or a side wall of the body, and the first matching member is adapted to detachably connect with the first fixing member to allow the first shielding member to be attached to the outer surface of the side wall.

In one or more of the aspects above, the fixing mechanism further includes a second fixing member and a second matching member. The second fixing member is disposed on the first shielding member. The second matching member is disposed on the top wall, and the second matching member is adapted to detachably connect with the second fixing member to allow the first shielding member to be attached to the outer surface of the top wall.

In one or more of the aspects above, the fixing mechanism further includes a second matching member. The second matching member is disposed on the top wall and adapted to detachably connect with the first fixing member to allow the first shielding member to be attached to the outer surface of the top wall.

In one or more of the aspects above, the first fixing member and the first matching member are a pair of magnets, a pair of snap buttons, or a pair of adhesive buttons matching each other, or a hook and a loop matching each other.

In one or more of the aspects above, the animal carrying device further includes a second shielding member. The second shielding member is provided with a second protective structure. One end of the second shielding member is connected to the body and serves as a second pivot end, allowing the second shielding member to flip between a third position and a fourth position. When the first shielding member is in the second position, and when the second shielding member is in the fourth position, the second shielding member and the first shielding member jointly cover the top wall viewing area. When the second shielding member is in the third position, the second protective structure covers at least part of another of the multiple side walls of the body.

In one or more of the aspects above, the second protective structure includes a first protection layer and a second protection layer stacked with the first protection layer. The first protection layer has better elasticity than the second protection layer. The second shielding member has a first surface and a second surface opposite to each other, and the second surface of the second shielding member is adapted to face the side wall of the body, and the second protection layer is farther from the second surface than the first protection layer.

In one or more of the aspects above, the second protection layer is a plate-like structure. The second protection layer is made of material selected from at least one of PE, EPP, EPS, or EPO. The first protection layer is made of foam.

In one or more of the aspects above, the second shielding member is an elastic member. The second shielding member is adapted to be connected to the first shielding member or to the body through a fixing mechanism, to allow the second shielding member to be attached to the first shielding member or to be attached to the outer surface of the body.

In one or more of the aspects above, the fixing mechanism includes a first securing member and a first adapter member. The first securing member is disposed on the second shielding member. The first adapter member is disposed on the base or disposed on the side wall of the body, and is adapted to detachably connect with the first securing member, to allow the second shielding member to be attached to the outer surface of the side wall of the body.

In one or more of the aspects above, the fixing mechanism further includes a second securing member disposed on the second shielding member. A second adapter member is disposed on the first shielding member and is adapted to detachably connect with the second securing member, thereby connecting the second shielding member and the first shielding member together, and allowing the first shielding member and the second shielding member to jointly cover the top wall viewing area.

In one or more of the aspects above, the fixing mechanism further includes a second adapter member disposed on the first shielding member. The second adapter member is adapted to detachably connect with the first securing member, thereby connecting the second shielding member and the first shielding member together, and allowing the first shielding member and the second shielding member to jointly cover the top wall viewing area.

In one or more of the aspects above, the fixing mechanism further includes a first matching member and a first fixing member. The first matching member is disposed on the base or on the side wall of the body, and the first fixing member is disposed on the first shielding member. The first fixing member is adapted to detachably connect with the first matching member, to allow the first shielding member to be attached to the outer surface of the side wall of the body. The first fixing member is adapted to detachably connect with the first securing member, thereby connecting the second shielding member and the first shielding member together, and allowing the first shielding member and the second shielding member to jointly cover the top wall viewing area.

In one or more of the aspects above, the first fixing member and the first matching member are a pair of magnets, a pair of snap buttons, or a pair of adhesive buttons matching each other.

In one or more of the aspects above, the first shielding member has a first movable end away from a first pivot end, and the first pivot end and the second pivot end are located at opposite sides of the top wall viewing area, respectively. The second shielding member has a second movable end away from a second pivot end. When the first shielding member is in the second position, and when the second shielding member is in the fourth position, the first movable end abuts against the second movable end.

In one or more of the aspects above, when the first shielding member is in the second position, and when the second shielding member is in the fourth position, the first shielding member and the second shielding member at least partially overlap.

In one or more of the aspects above, the animal carrying device further includes a buffer body, and the buffer body is detachably disposed on the body through a connecting mechanism and at least partially covers another of the multiple side walls of the body.

In one or more of the aspects above, the other one of the left side wall and the right side wall of the body has an opening, and the buffer body is adapted to cover at least the opening in the other one of the left side wall and the right side wall of the body.

In one or more of the aspects above, the connecting mechanism includes multiple first engaging portions and multiple second engaging portions. The multiple first engaging portions are disposed on the buffer body. The multiple second engaging portions are disposed on the body. The multiple first engaging portions engage with the multiple second engaging portions, to allow the buffer body to cover at least part of the side wall of the body.

In one or more of the aspects above, one of the first engaging portion and the second engaging portion is a hook, and the other one of the first engaging portion and the second engaging portion is a loop. The hook is adapted to hook onto the loop.

In one or more of the aspects above, the buffer body includes a first buffer layer and a second buffer layer stacked with the first buffer layer. The first buffer layer has better elasticity than the second buffer layer and is farther from the body than the second buffer layer.

In one or more of the aspects above, the second buffer layer is a plate-like structure, and the second buffer layer is made of material selected from at least one of PE, EPP, EPS, or EPO. The first buffer layer is made of foam.

In one or more of the aspects above, the ventilation mesh sheet is openably and closably arranged on the body through a zipper to allow opening or closing of the carrying space.

In one or more of the aspects above, the rear side wall of the body is provided with a connecting fabric, and a passage is formed between the connecting fabric and the rear side wall. The passage passes through along a direction perpendicular to the base.

In one or more of the aspects above, the first shielding member is detachably connected to the body through a fixing mechanism, to allow the first shielding member to be selectively positioned in the first position or in the second position.

In one or more of the aspects above, the fixing mechanism includes a first fixing member and a first matching member. The first fixing member is disposed on the first shielding member. The first matching member is disposed on the body and located at a side of the top wall viewing area adjacent to the one of the multiple side walls, and the first matching member is adapted to detachably connect with the first fixing member. When the first fixing member connects with the first matching member, the first shielding member can flip between the first position and the second position.

In one or more of the aspects above, the fixing mechanism further includes a second fixing member and a second matching member. The second fixing member is disposed on the first shielding member. The second matching member is disposed on the one of the multiple side walls of the body or on the base. The second matching member is adapted to detachably connect with the second fixing member. When the first fixing member connects with the first matching member, and when the second fixing member connects with the second matching member, the first shielding member is restrained in the first position.

In one or more of the aspects above, the fixing mechanism further includes a second fixing member and a third matching member. The second fixing member is disposed on the first shielding member. The third matching member is disposed at another side of the top wall viewing area. The third matching member is adapted to detachably connect with the second fixing member. When the first fixing member connects with the first matching member, and when the second fixing member connects with the third matching member, the first shielding member is restrained in the second position.

In one or more of the aspects above, the first shielding member further has a third position, in which the first shielding member is adapted to shield at least part of the other one of the multiple side walls of the body. When the second fixing member connects with the third matching member, and when the first fixing member is not connected, the first shielding member can flip between the third position and the second position. Alternatively, the first fixing member is adapted to detachably connect with the third matching member. When the first fixing member connects with the third matching member, and when the second fixing member is not connected, the first shielding member can flip between the third position and the second position.

In one or more of the aspects above, the fixing mechanism includes a first fixing member, a second fixing member, a first matching member, and a second matching member. The first fixing member is disposed on the first shielding member, and the second fixing member is disposed on the first shielding member and is arranged opposite to the first fixing member. The first matching member is disposed on the body, and the second matching member is disposed on the body or the base and arranged opposite to the first matching member. The first matching member is adapted to detachably connect with the first fixing member, and the second matching member is adapted to detachably connect with the second fixing member, thereby restraining the first shielding member in the first position.

In one or more of the aspects above, the fixing mechanism further includes a third matching member and a fourth matching member, and the third matching member and the fourth matching member are disposed at opposite sides of the top wall viewing area, respectively. The third matching member is adapted to detachably connect with the first fixing member, and the fourth matching member is adapted to detachably connect with the second fixing member, thereby restraining the first shielding member in the second position.

In one or more of the aspects above, the first shielding member further has a third position, in which the first shielding member is adapted to shield at least part of the other one of the multiple side walls of the body. The fixing mechanism further includes a fifth matching member and a sixth matching member which are arranged opposite to each other. The fifth matching member is adapted to detachably connect with the first fixing member, and the sixth matching member is adapted to detachably connect with the second fixing member, thereby restraining the first shielding member in the third position.

In one or more of the aspects above, one of the first fixing member and the first matching member is a hook, and the other one of the first fixing member and the first matching member is a loop. Alternatively, the first fixing member and the first matching member are matching snap buttons, or matching adhesive buttons, or a zipper, or magnets.

In one or more of the aspects above, when the first shielding member is in the second position, the first shielding member has a reverse installation mode where a first side surface of the first shielding member faces the top wall viewing area and a forward installation mode where the first side surface faces away from the top wall viewing area. When the first shielding member is installed in the second position in the forward installation mode, at least part of the fixing mechanism is covered by the first shielding member.

In one or more of the aspects above, the first protective structure further includes a third protective layer stacked with the first protective layer of the first protective structure. The first protective layer has better elasticity than the third protective layer and is disposed between the third protective layer and the second protective layer of the first protective structure.

In one or more of the aspects above, the third protective layer is a plate-like structure, and the third protective layer is made of material selected from at least one of PE, EPP, EPS, or EPO.

In one or more of the aspects above, when the first shielding member is in the first position, either the first side surface or the second side surface of the first shielding member can face one of the multiple side walls of the body.

According to yet another aspect of the present application, another animal carrying device is provided. This device can improve assembly accuracy, reduce positional deviations or misalignments during assembly, thereby enhancing production efficiency and improving yield rates. The animal carrying device includes: a body, a bottom wall of the body being provided with at least two first positioning parts; and a base including an upper cover and a lower cover. One of the upper cover and the lower cover is provided with at least two limiting parts, and the other is provided with at least two second positioning parts. Each limiting part corresponds to a corresponding first positioning part and a corresponding second positioning part. The upper cover and the lower cover are located at opposite sides of the bottom wall of the body, respectively. Each limiting part is configured to engage with the corresponding first positioning part and the corresponding second positioning part to position the body and the base.

The animal carrying device provided in this embodiment adopts a design that the body and the base are positioned through engagement thereof, thus providing a fast and stable assembly manner. Specifically, the body and the base achieve a rapid and precise alignment and fixation through the engagement of the limiting parts with the first positioning parts and the second positioning parts, thereby realizing a fast installation of the body and the base. Such a design not only simplifies the assembly process, but also improves the assembly accuracy and assembly efficiency.

In one or more of the aspects above, each first positioning part is a first positioning hole, each second positioning part is a second positioning hole, and each limiting part is a positioning column. The positioning column passes through the corresponding first positioning hole and the corresponding second positioning hole to position the body and the base.

In one or more of the aspects above, the body has a front side wall and a rear side wall opposite to each other. A direction in which the front side wall and the rear side wall are arranged opposite to each other is defined as a first direction, and a straight line extending along the first direction and passing through a geometric center of the body is defined as a reference straight line. The multiple first positioning holes are symmetrically arranged relative to the reference straight line.

In one or more of the aspects above, the positioning columns are connected by reinforcing ribs.

In one or more of the aspects above, a carrying space is formed inside the body. The first positioning hole communicates with the carrying space. The upper cover is located at a side of the bottom wall of the body facing the carrying space, and the lower cover is located at a side of the bottom wall of the body facing away from the carrying space.

In one or more of the aspects above, the animal carrying device further includes a fixing member. The bottom wall of the body is provided with a reinforcing member. One of the reinforcing member and the upper cover is provided with a first connecting part, and the other is provided with a second connecting part. The fixing member connects the first connecting part and the second connecting part to achieve fixation between the reinforcing member and the upper cover.

In one or more of the aspects above, the body is made of a soft material, and the reinforcing member is made of a hard material.

In one or more of the aspects above, the body includes a front side wall, a right side wall, a rear side wall, and a left side wall which are connected in sequence along a circumferential direction. Two reinforcing members are disposed on the bottom wall of the body at an interval along a direction in which the left side wall and the right side wall are arranged opposite to each other.

In one or more of the aspects above, the body has a front side wall and a rear side wall. At least one of the front side wall and the rear side wall extends toward the bottom wall of the body to form an extended edge. One of the upper cover of the body bottom wall and the extended edge is provided with a limiting column, and the other is provided with a first limiting hole. The limiting column is configured to be inserted into the first limiting hole.

In one or more of the aspects above, the body has a front side wall and a rear side wall. Outer edges of the front side wall and/or the rear side wall away from the base are provided with supporting members.

In one or more of the aspects above, the body has a front side wall and a rear side wall. At least part of the front side wall and/or the rear side wall forms a first hollowed-out area, and the first hollowed-out area is covered with a first ventilation mesh sheet.

In one or more of the aspects above, the animal carrying device further includes a side cover, a first locking member, and a first matching member. At least one of the left side wall and the right side wall of the body is provided with a side opening. The side cover is movably disposed at the side opening to allow the side cover to have a first open position and a first closed position. When the side cover is in the first open position, the side opening is exposed. When the side cover is in the first closed position, the side cover covers the side opening. The first locking member and the first matching member are disposed on opposite ends of the side cover respectively. When the side cover is in the first open position, the first locking member engages with the first matching member to keep the side cover in the first open position.

In one or more of the aspects above, the animal carrying device further includes a side cover. At least one of the left side wall and the right side wall of the body is provided with a side opening. The side cover is movably disposed at the side opening, so that the side cover has a first open position and a first closed position. When the side cover is in the first open position, the side opening is exposed, and when the side cover is in the first closed position, the side cover covers the side opening.

In one or more of the aspects above, one end of the side cover is movably connected to the body and serves as a first pivot end, to allow the side cover to switch between the first open position and the first closed position by rounding the first pivot end. The side cover has a first movable end away from the first pivot end. When the side cover is in the first closed position, the first pivot end and the first movable end are located at opposite sides of the side opening, respectively. The first movable end is provided with a first locking member, and the first pivot end is provided with a first matching member. When the side cover is in the first open position, the first locking member engages with the first matching member to keep the side cover in the first open position.

In one or more of the aspects above, the first locking member and the first matching member are a pair of magnets, a pair of snap buttons, or a pair of adhesive buttons matching each other.

In one or more of the aspects above, the animal carrying device further includes a top cover. A top wall of the body has a top opening. The top cover is movably disposed at the top opening, to allow the top cover to have a second open position and a second closed position. When the top cover is in the second open position, the top opening is exposed. When the top cover is in the second closed position, the top cover covers the top opening.

In one or more of the aspects above, one end of the top cover is movably connected to the body and serves as a second pivot end to allow the top cover to switch between the second open position and the second closed position by rounding the second pivot end. The top cover has a second movable end away from the second pivot end. When the top cover is in the second closed position, the second pivot end and the second movable end are located at opposite sides of the top opening respectively. The second movable end is provided with a second locking member, and the second pivot end is provided with a second matching member. When the top cover is in the second open position, the second locking member engages with the second matching member to keep the top cover in the second open position.

In one or more of the aspects above, the second locking member and the second matching member are a pair of magnets, a pair of snap buttons, or a pair of adhesive buttons matching each other.

In one or more of the aspects above, at least part of the side cover and/or the top cover forms a second hollowed-out area, and the second hollowed-out area is covered with a second ventilation mesh sheet.

According to yet another aspect of the present application, an animal carrying device is provided. The animal carrying device includes a body and a bottom support member. The bottom support member is connected to the body, and forms a box body providing an accommodation space together with the body. The body includes a side support member and an upper support member that can be detachably connected to each other. The body is provided with at least one anti-collision protection member. The anti-collision protection member is disposed at least on a side of the body adjacent to a vehicle door, and the at least one anti-collision protection member is detachably connected to the body.

### BRIEF DESCRIPTION OF THE DRAWINGS

The drawings, which form a portion of this application, are provided to make the present application further understood. The illustrative embodiments and the description thereof are used to explain the present application but not intended to constitute improper limitations of the present application.

To illustrate the technical solutions in the embodiments of the present application more clearly, the accompanying drawings needed to be used for the description of the embodiments are briefly introduced below. Obviously, the drawings in the following description are only some embodiments of the present application. For those of ordinary skill in the art, other drawings can be obtained based on these drawings without creative effort.

Additionally, the drawings are not drawn to a 1:1 scale, and relative dimensions of all components are only illustrated as examples in the drawings and may not be drawn to an actual scale. In the drawings:
FIG. 1 shows a perspective view of an animal carrying device according to a first embodiment of the present invention, where a first shielding member is in a second position;
FIG. 2 shows a perspective view of the animal carrying device in FIG. 1, where the first shielding member is in a first position;
FIG. 3 shows a right view of the animal carrying device in FIG. 2;
FIG. 4 shows a perspective view of the animal carrying device in FIG. 2 from another visual angle, where a top ventilation mesh sheet is partially opened;
FIG. 5 is a schematic structural view showing the first shielding member in the first position according to the first embodiment of the present invention;
FIG. 6 is a schematic structural view showing the first shielding member in the second position according to the first embodiment of the present invention;
FIG. 7 shows a perspective view of an animal carrying device according to a second embodiment of the present invention;
FIG. 8 shows a rear view of a buffer body in FIG. 7;
FIG. 9 shows a sectional view of the buffer body along U1-U1 in FIG. 8;
FIG. 10 shows a perspective view of an animal carrying device according to a third embodiment of the present invention, where the first shielding member is in the second position and a second shielding member is in a fourth position;
FIG. 11 shows a perspective view of the animal carrying device in FIG. 10, where the first shielding member is in the first position and the second shielding member is in a third position;
FIG. 12 shows a perspective view of the animal carrying device in FIG. 10 from another visual angle, where the first shielding member is in the second position and the second shielding member is in the fourth position;
FIG. 13 is a schematic structural view showing the first shielding member in the second position and the second shielding member in the fourth position according to the third embodiment of the present invention;
FIG. 14 shows a perspective view of an animal carrying device according to a fourth embodiment of the present invention, where the first shielding member is in the first position and the second shielding member is in the third position;
FIG. 15 is a schematic structural view showing the first shielding member in the second position and the second shielding member in the fourth position according to the fourth embodiment of the present invention;
FIG. 16 shows a perspective view of an animal carrying device according to a fifth embodiment of the present invention, where the first shielding member is in the second position and the second shielding member is in the fourth position;
FIG. 17 is a schematic structural view showing the first shielding member in the second position and the second shielding member in the fourth position according to the fifth embodiment of the present invention;
FIG. 18 shows a perspective view of an animal carrying device according to a sixth embodiment of the present invention, where the first shielding member is installed forward in the first position;
FIG. 19 shows a perspective view of the animal carrying device in FIG. 18, where the first shielding member is installed reversely in the second position;
FIG. 20 shows a perspective view of the animal carrying device in FIG. 18 from another visual angle, where the first shielding member is installed forward in the second position;
FIG. 21 shows a rear view of the animal carrying device in FIG. 18, where the first shielding member is installed forward in the third position;
FIG. 22 shows a schematic structural view illustrating the first shielding member installed in the first position according to the sixth embodiment of the present invention;
FIG. 23 shows a schematic structural view illustrating the first shielding member installed in the first position according to a seventh embodiment of the present invention;
FIG. 24 shows a perspective view of an animal carrying device according to an eighth embodiment of the present invention, where the first shielding member is installed reversely in the second position;
FIG. 25 shows a perspective view of the animal carrying device in FIG. 24 from another visual angle, where the first shielding member is installed forward in the second position;
FIG. 26 is a perspective view of an animal carrying device according to a ninth embodiment of the present application;
FIG. 27 is a front view of the animal carrying device shown in FIG. 26;
FIG. 28 is a rear view of the animal carrying device shown in FIG. 26;
FIG. 29 is a side view of the animal carrying device shown in FIG. 26;
FIG. 30 is a top view of the animal carrying device shown in FIG. 26;
FIG. 31 is a perspective view of a body of the animal carrying device shown in FIG. 26;
FIG. 32 is a bottom view of the body shown in FIG. 31, where an upper cover is located inside the body;
FIG. 33 shows a top view of the upper cover of a base of the animal carrying device shown in FIG. 26;
FIG. 34 shows a top view of a lower cover of the base of the animal carrying device shown in FIG. 26;
FIG. 35 is a perspective view of a carrier according to a tenth embodiment of the present disclosure;
FIG. 36 is another perspective view of the carrier shown in FIG. 35, where part of a second closing member is separated from the body;
FIG. 37A is another perspective view of the carrier according to the tenth embodiment of the present disclosure, where the carrier is provided with an anti-collision protection member;
FIG. 37B shows another side of the anti-collision protection member shown in FIG. 37A;
FIG. 38 is a schematic view showing the carrier installed on a vehicle seat.

Description of reference signs:
A1000, animal carrying device; A100, body; A101, first fixed connection portion; A102, second fixed connection portion; A103, carrying space; A120, left side wall; A1201, second opening; A130, right side wall; A1301, first opening; A140, front side wall; A150, second engaging portion; A160, rear side wall; A170, top wall; A1701, top wall opening; A171, top wall viewing area; A180, handle; A200, base; A400, anchoring structure; A410, ISOFIX connection assembly; A510, buffer body; A511, first buffer layer; A512, second buffer layer; A513, protective cover; A520, first engaging portion; A514, front surface; A515, back surface; A600a, first shielding member; A600b, second shielding member; A601, first pivot end; A602, second pivot end; A603, first movable end; A604, second movable end; A605, first edge; A606, second edge; A610, first protective structure; A611, first protective layer; A612, second protective layer; A613, third protective layer; A620, second protective structure; A621, first protection layer; A622, second protection layer; A630, first shielding fabric cover; A631, first side surface; A632, second side surface; A640, second shielding fabric cover; A641, first surface; A642, second surface; A700, fixing mechanism; A711, first fixing member; A712, second fixing member; A721, first matching member; A722, second matching member; A723, third matching member; A724, fourth matching member; A725, fifth matching member; A726, sixth matching member; A731, first securing member; A741, first adapter member; A742, second adapter member; A901, ventilation mesh sheet; A902, ventilation mesh sheet; A903, top wall ventilation mesh sheet; A904, zipper; A905, connecting fabric; I, overlapping area;
B1000, animal carrying device; B100, body; B110, carrying space; B120, front side wall; B121, extended edge; B122, first limiting hole; B130, right side wall; B140, rear side wall; B150, left side wall; B151, side opening; B160, top wall; B161, top opening; B170, bottom wall; B171, first positioning part; B1711, first positioning hole; B172, through hole; B200, base; B210, upper cover; B211, limiting part; B2111, positioning column; B212, reinforcing rib; B213, limiting column; B214, first connecting part; B2141, connecting column; B220, lower cover; B221, second positioning part; B2211, second positioning hole; B222, second limiting hole; B230, folding groove; B231, abutting convex part; B300, supporting member; B400, reinforcing member; B410, second connecting part; B411, connecting hole; B510, first ventilation mesh sheet; B520, second ventilation mesh sheet; B610, pocket; B620, connecting fabric; B710, side cover; B711, first pivot end; B712, first movable end; B720, top cover; B721, second pivot end; B722, second movable end; B810, handle; B820, buckle; B900, anchoring assembly; B910, ISOFIX connector; B911, pivot end; B912, free end; B913, convex member; F1, first direction; F2, second direction; S1, reference straight line;
1100, carrier; 1100A, carrier; 1110, body; 1111, side support member; 1112, upper support member; 1116, first window; 1116a, first closing member; 1117, second window; 1117a, second closing member; 1120, bottom support member; 1130, body cover member; 1140, bottom cover member; 1150, first connecting component; 1160, second connecting component; 1160A, second connecting component; 1170, anti-collision protection member; 1170a, inner surface; 1170b, outer surface; 1181, first fixing member; 1182, second fixing member; 1300, fixing strap assembly; 1600, vehicle seat.

### DETAILED DESCRIPTION OF THE EMBODIMENTS

To make the objectives, technical solutions, and advantages of the present invention clearer, the present invention will be described in detail with reference to the accompanying drawings and specific embodiments hereinafter. It should be understood that the specific embodiments described herein are only used to explain the present invention but not intended to limit the scope of protection of the present invention.

It should be noted that, unless otherwise explicitly specified and defined, the terms "front", "rear", "left", "right", and other directional terms about an animal carrying device A1000 in the embodiments of the present invention are based on the orientations shown in the drawings. Arrows L and R in the drawings illustratively indicate the "left" and "right" directions, and arrows F and B illustratively indicate the "front" and "rear" directions. These directional terms are only used to make the description of the embodiments of the present invention clearer but not intended to improperly limit the scope of protection of the present invention.

It should be noted that when an element is referred to as being "fixed to" another element, it may be directly on the other element, or there may be an intervening element. When an element is referred to be "connected to" another element, it may be directly connected to the other element, or there may be an intervening element. The terms "vertical", "horizontal", "left", "right" and similar expressions are used for description only and do not represent the only implementation.

Unless otherwise defined, all technical and scientific terms used herein have the same meanings as commonly understood by those skilled in the technical field of the present invention. The terms used in the specification of the present invention are only used for describing specific embodiments but not intended to limit the present invention. The term "and/or" as used herein includes any and all combinations of one or more related listed items.

### Embodiment 1

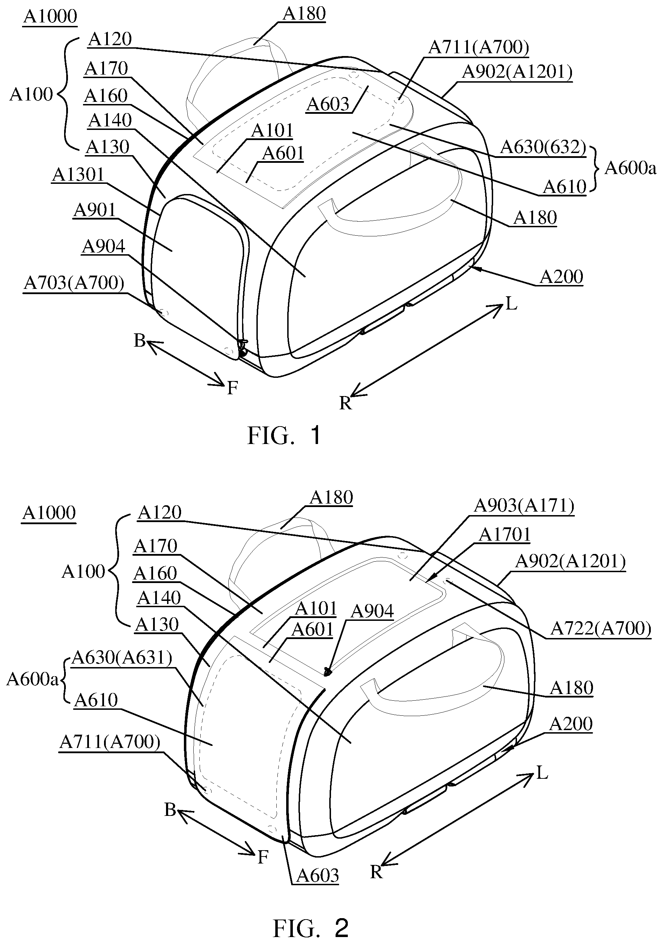

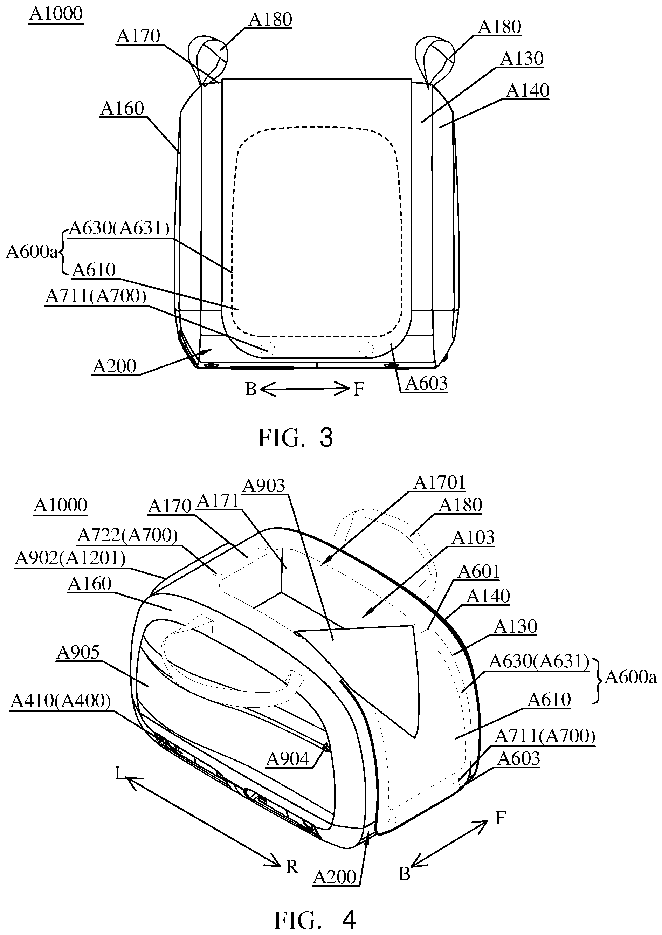

As shown in FIG. 1, an animal carrying device A1000 may be, but is not limited to, a sleeping box, a pet box, a pet carrier, or a pet bag. The animal carrying device A1000 may be fixed to a vehicle seat or may be carried (e.g., may be held, or slung over a back, etc.). The animal carrying device A1000 includes a body A100, a base A200, and a first shielding member A600a. The first shielding member A600a is movably connected to the body A100, so that the first shielding member A600a can switch between a first position and a second position. The body A100 is arranged on the base A200, and the body A100, together with the base A200, forms a carrying space A103. The base A200, for example, is made of a hard material to form a support for the body A100, and the body A100 may include fabric sheets and other materials through which the carrying space A103 is enclosed. Referring to FIG. 4, an interior of the animal carrying device A1000 has a carrying space A103 for accommodating an animal. It should be noted that the first shielding member A600a being movably connected to the body A100 includes different implementations as follows: the first shielding member A600a is connected to the body A100, and at least part of the first shielding member A600a can move (e.g., flip, or slide) relative to the body A100; the first shielding member A600a is detachably connected to the body A100, so that the first shielding member A600a can be separated from the body A100. Exemplarily, the first shielding member A600a is made of a fabric sheet, one end of the first shielding member A600a is sewn on the body A100, and another end of the first shielding member A600a can flip between a position close to a top surface of the body A100 and a position close to a side surface of the body A100 relative to the body A100 and along a sewing line.

FIGS. 1 and 2 show perspective views of the animal carrying device A1000 according to the first embodiment of the present invention. In FIG. 1, the first shielding member A600a of the animal carrying device A1000 is in a second position, and in FIG. 2, the first shielding member A600a of the animal carrying device A1000 is in a first position. The first shielding member A600a may be configured to cover an opening of the carrying space A103, thus achieving a switch between sunlight shielding and ventilation. For example, when at outdoors, the first shielding member A600a may be configured to cover the opening to achieve sunlight shielding (referring to FIG. 1), while in a vehicle, the first shielding member A600a may be moved away from the opening to achieve ventilation (referring to FIG. 2).

As shown in FIGS. 1 and 2, the body A100 has a top wall A170 and multiple side walls connected to the top wall A170. The multiple side walls of the body A100 may include a left side wall A120, a right side wall A130, a front side wall A140, and a rear side wall A160. The front side wall A140 forms a front wall of the carrying space A103, the left side wall A120 forms a left wall of the carrying space A103, the right side wall A130 forms a right wall of the carrying space A103, the rear side wall A160 forms a rear wall of the carrying space A103, and the top wall A170 forms a top wall of the carrying space A103. In some embodiments, the bottom wall of the carrying space A103 is formed by a base A200, and the front side wall A140, the left side wall A120, the right side wall A130, and the rear side wall A160 are directly connected to the base A200. In some alternative embodiments, the body A100 has a bottom wall, and the bottom wall is fixed on the base A200 to form the bottom wall of the carrying space A103. In some embodiments of the present disclosure, the base A200 constitutes the bottom wall of the body A100.

As shown in FIGS. 1 to 2, the animal carrying device A1000 is provided with a handle A180, and the handle A180 is configured for carrying the animal carrying device A1000. The number of the handles A180 are two, and the two handles are fixed to the front side wall A140 and the rear side wall A160, respectively. Specifically, each handle A180 is formed by a strap sewn onto the body A100.

As shown in FIG. 4, an anchoring structure A400 is arranged on the rear side wall A160 of the animal carrying device A1000, and the anchoring structure A400 is adapted to be connected to a vehicle seat, thus fixing the animal carrying device A1000 to the vehicle seat. In an embodiment, the anchoring structure A400 includes at least one International Standards Organization FIX (ISOFIX) connection assembly A410, and the at least one ISOFIX connection assembly A410 is configured to be connected to at least one connection point on the vehicle seat. In an alternative embodiment, the anchoring structure A400 includes at least one Latch connection assembly, and the at least one Latch connection assembly is configured to be connected to at least one connection point on the vehicle seat. The specific structure of the anchoring structure A400 will not be described in detail herein.

Continuing to refer to FIG. 4, a connecting fabric A905 is arranged on the rear side wall A160 of the body A100, and a passage is formed between the connecting fabric A905 and the rear side wall A160 and configured to allow, for example, a pull rod of a suitcase to pass through. The passage passes through along a direction perpendicular to the base A200, i.e., passes through along a vertical direction. Specifically, left and right ends of the connecting fabric A905 are fixed to the side walls of the rear side wall A160 of the body A100 by sewing respectively. In an embodiment, the connecting fabric A905 has a multi-layer fabric structure, and a pocket is formed between the multi-layer fabrics and configured for receiving items. A zipper A904 is arranged at an opening of the pocket, thus allowing the pocket to be opened or closed. Optionally, the connecting fabric A905 and the anchoring structure A400 are located on the same side of the body A100.

As shown in FIGS. 2 and 4, the top wall A170 of the body A100 has a top wall viewing area A171. The top wall viewing area A171 includes a top wall opening A1701 and a top wall ventilation mesh sheet A903 covering the top wall opening A1701. The shape of the top wall ventilation mesh sheet A903 matches the shape of the top wall opening A1701. In other words, the position of the top wall ventilation mesh sheet A903 corresponds to the position of the top wall opening A1701. The arrangement of the top wall ventilation mesh sheet A903 facilitates observation of an animal inside the body A100 and increases the ventilation of the body A100. In some alternative embodiments, the top wall viewing area A171 may consist of the top wall opening A1701 and a transparent object disposed at the top wall opening A1701, thus allowing viewing through the top wall viewing area A171 conveniently, which is not limited in this application.

As shown in FIG. 1, one of the left side wall A120 and the right side wall A130 of the body A100 has an opening (i.e., a first opening A1301), and the first opening A1301 may be covered with a ventilation mesh sheet A901. As shown in FIG. 2, the other one of the left side wall A120 and the right side wall A130 of the body A100 has an opening (i.e., a second opening A1201), and the second opening A1201 is covered with a ventilation mesh sheet A902. In an embodiment, the right side wall A130 is provided with the first opening A1301, and the ventilation mesh sheet A901 is arranged at the first opening A1301. The left side wall A120 has the second opening A1201, and the ventilation mesh sheet A902 is arranged at the second opening A1201. The shape of the ventilation mesh sheet A901 matches the shape of the first opening A1301, and the shape of the ventilation mesh sheet A902 matches the shape of the second opening A1201. In other words, the position of the ventilation mesh sheet A901 corresponds to the position of the first opening A1301, and the position of the ventilation mesh sheet A902 corresponds to the position of the second opening A1201. The structure and shape of the ventilation mesh sheet A901 are approximately identical with those of the ventilation mesh sheet A902, respectively, and zones corresponding to the first opening A1301 and second opening A1201 are buffer zones. Through arrangement of the ventilation mesh sheets (including the top wall ventilation mesh sheet A903, the ventilation mesh sheet A901, and the ventilation mesh sheet A902), the ventilation of the carrying space A103 inside the animal carrying device A1000 can be improved.

In another embodiment, the ventilation mesh sheet A901 and the top wall ventilation mesh sheet A903 may be arranged on the body A100 without the ventilation mesh sheet A902. In yet other embodiments, the top wall A170 is provided with the top wall ventilation mesh sheet A903, and at least one of the front side wall A140 and the rear side wall A160 is provided with other ventilation mesh sheets (not shown). In other embodiments, one of the left side wall A120 and the right side wall A130 of the body A100 is provided with the ventilation mesh sheet A901, and at least one of the front side wall A140 and the rear side wall A160 of the body A100 is provided with other ventilation mesh sheets (not shown), while the top wall A170 is not provided with the top wall ventilation mesh sheet A903. In other words, other ventilation mesh sheets are arranged on any two adjacent surfaces of the front side wall A140, rear side wall A160, left side wall A120, right side wall A130, and top wall A170 of the body A100, which is not limited in this application.

As shown in FIGS. 1 and 2, at least one of the top wall ventilation mesh sheet A903 and the ventilation mesh sheet A901 may be openably and closably arranged on the body A100 through, for example, a zipper A904, thus allowing the carrying space A103 to be opened or closed (see FIG. 4), thereby facilitating an entry of an animal into and an exit of an animal out of the animal carrying device A1000. The top wall ventilation mesh sheet A903 is openably and closably arranged at the top wall opening A1701 through the zipper A904. Optionally, when the top wall ventilation mesh sheet A903 is not zipped closed by the zipper A904, the top wall ventilation mesh sheet A903 can flip front and back relative to the body A 100, or the top wall ventilation mesh sheet A903 can flip left and right relative to the body A100, or the top wall ventilation mesh sheet A903 can be separated from the top wall A170. The ventilation mesh sheet A901 is openably and closably arranged at the first opening A1301 through the zipper A904. Optionally, when the ventilation mesh sheet A901 is not zipped closed by the zipper A904, it can flip front and back relative to the body A100, or flip up and down relative to the body A100, or be separated from the right side wall A130. Similarly, the ventilation mesh sheet A902 is openably and closably arranged at the second opening A1201 through the zipper A904. Optionally, when the ventilation mesh sheet A902 is not zipped closed by the zipper A904, the ventilation mesh sheet A902 can flip front and back relative to the body A100, or the ventilation mesh sheet A902 can flip up and down relative to the body A100, or the ventilation mesh sheet A902 can be separated from the left side wall A120. In an embodiment, one side of the top wall ventilation mesh sheet A903 adjacent to the right side wall A130 is connected to the top wall A170 by, for example, sewing, thus allowing the top wall ventilation mesh sheet A903 to flip left and right relative to the body A100. One side of the ventilation mesh sheet A901 is connected to the right side wall A130, for example, by sewing, thus allowing the ventilation mesh sheet A901 to flip up and down or front and back. One side of the ventilation mesh sheet A902 is connected to the left side wall A120, for example, by sewing, thus allowing the ventilation mesh sheet A902 to flip up and down or front and back.

As shown in FIGS. 1 and 2, in an embodiment, the first shielding member A600a is flippably disposed on the body A100. The first shielding member A600a is provided with a first protective structure A610, and the first protective structure A610 is configured for buffering potential external impacts on the buffer zone, thereby reducing potential harm to an animal inside the carrying space A103 caused by external impacts. One end of the first shielding member A600a serves as a first pivot end A601 and is connected to the body A100, thus allowing the first shielding member A600a to flip between the first position and the second position. As shown in FIG. 1, the second position is a sunlight shielding position, where sunlight can be prevented from shining into the body A100 passing through the top wall A170. As shown in FIG. 2, the first position is a protective position, where potential impacts on the side walls of the body A100 can be buffered. One end of the first shielding member A600a away from the first pivot end A601 serves as a first movable end A603. Specifically, the first pivot end A601 is connected to a position on the body A100 between the top wall viewing area A171 and the first opening A1301. In other words, the body A100 has a first fixed connection portion A101 connected to the first pivot end A601 of the first shielding member A600a, and the first fixed connection portion A101 is located between the top wall viewing area A171 and the first opening A1301. The first fixed connection portion A101 may be located on the top wall A170 of the body A100 or on the right side wall A130 of the body A100.

Referring to FIGS. 1 to 4, the first shielding member A600a may be an elastic member that can deform flexibly and reset to its original shape. The first shielding member A600a is adapted to be connected to the body A100 or the base A200 through a fixing mechanism A700, so that the first shielding member A600a can be adapted to be attached to an outer surface of a side wall of the body A100 or an outer surface of the top wall A170. In other words, the first shielding member A600a can be fixed to at least one of the top wall A170 and the side walls of the body A100 through the fixing mechanism A700. The specific structure of the fixing mechanism A700 will be described in detail hereinafter.

Referring to FIG. 2, when the first shielding member A600a is in the first position, the first protective structure A610 covers at least part of one of the multiple side walls of the body A100, thereby buffering potential external impacts on the corresponding side wall. In this case, the first shielding member A600a is connected to the corresponding side wall of the body A100 or the base A200 through the fixing mechanism A700, so that the first shielding member A600a is attached to the outer surface of the corresponding side wall of the body A100. Specifically, when the first shielding member A600a is in the first position, the first protective structure A610 of the first shielding member A600a covers at least part of the right side wall A130. More specifically, the first protective structure A610 covers the first opening A1301 where the ventilation mesh sheet A901 is located (that is, covers the ventilation mesh sheet A901, or covers the buffer zone on the right side wall A130), thereby buffering the potential external impacts on the buffer zone on the right side wall A130. Optionally, the right side wall A130 may have no opening. Referring to FIGS. 1 and 2, when the first shielding member A600a is in the second position, the first shielding member A600a covers at least part of the top wall viewing area A171. In this case, the first shielding member A600a is connected to the top wall A170 of the body A100 through the fixing mechanism A700, so that the first shielding member A600a is attached to the outer surface of the top wall A170. In an embodiment, when the first shielding member A600a is in the second position, the first shielding member A600a covers the top wall viewing area A171. Specifically, the first shielding member A600a covers the top wall opening A1701 (that is, completely covers the top wall ventilation mesh sheet A903), thereby not only blocking sunlight, preventing sunlight from directly entering the carrying space A103, but also appropriately buffering potential external impacts on the top wall. In other words, when the first shielding member A600a is in the second position, the first shielding member A600a covers the top wall viewing area A171, and the first protective structure A610 may cover the top wall viewing area A171 or cover only part of the top wall viewing area A171, which is not limited in this application.

The shape of the first protective structure A610 of the first shielding member A600a matches the shape of the first opening A1301 (i.e., the buffer zone on the right side wall A130), that is, matches the shape of the ventilation mesh sheet A901 on the right side wall A130. In some alternative embodiments, the shape of the first protective structure A610 may not match the shape of the ventilation mesh sheet A901, as long as the first protective structure A610 can substantially cover the ventilation mesh sheet A901.

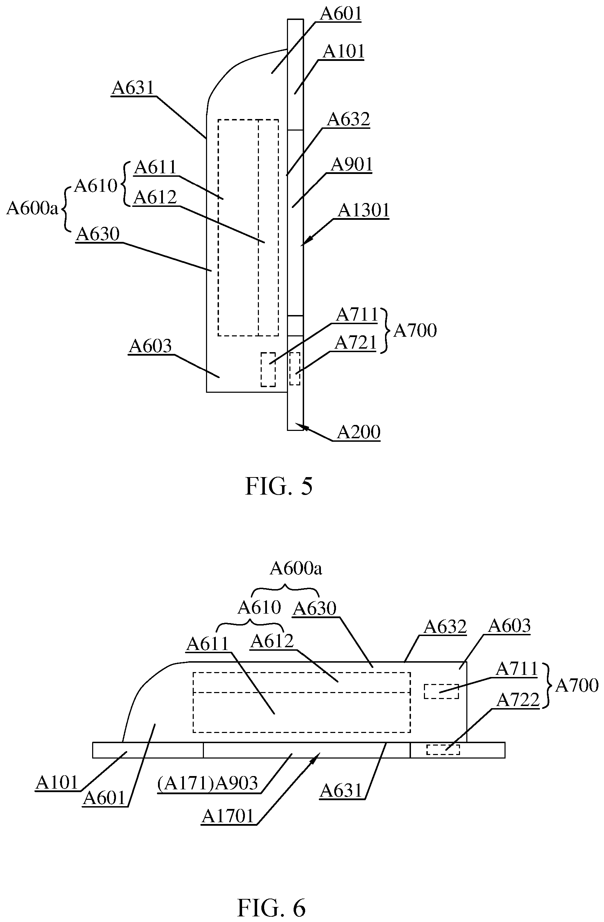

As shown in FIGS. 5 and 6, the first shielding member A600a has a first side surface A631 and a second side surface A632 opposite to each other. The first side surface A631 is adapted to face the top wall ventilation mesh sheet A903, and the second side surface A632 is adapted to face one of the multiple side walls of the body A100. When the first side surface A631 is in the second position, the first side surface A631 abuts and covers the first opening A1301 in the top wall of the body A100, while the second side surface A632 is exposed to the outside. When the first side surface A631 moves to the first position from the second position, the second side surface A632 abuts and covers the side wall of the body A100, while the first side surface A631 is exposed to the outside. The first shielding member A600a includes a first shielding fabric cover A630, and the first protective structure A610 is disposed inside the first shielding fabric cover A630. The first shielding fabric cover A630 is a multi-layer fabric structure, that is, the first protective structure A610 is disposed between two adjacent fabric layers. Specifically, the multi-layer fabrics are connected by, for example, sewing, bonding, or heat welding. The first shielding fabric cover A630 forms the first side surface A631 and the second side surface A632, respectively. One end of the first shielding fabric cover A630 forms the first pivot end A601, and the other end thereof forms the first movable end A603. The first pivot end A601 is fixedly connected to the first fixed connection portion A101 by, for example, sewing. Optionally, the first pivot end A601 is fixedly connected to the first fixed connection portion A101 by welding, bonding, or other manners, or the first pivot end A601 is detachably connected to the first fixed connection portion A101 through matching components (e.g., a hook and a clasp matching each other, a zipper capable of being opened or closed, etc.).

The first protective structure A610 includes a first protective layer A611 and a second protective layer A612. The second protective layer A612 and the first protective layer A611 are stacked with each other, and the second protective layer A612 is farther from the first side surface A631 than the first protective layer A611. In other words, when the first shielding member A600a is in the first position, the second side surface A632 faces the first opening A1301 (that is, faces the ventilation mesh sheet A901), and the first protective layer A611 is farther from the first opening A1301 than the second protective layer A612.

The first protective layer A611 has better elasticity than the second protective layer A612. The second protective layer A612 is a plate-like structure made of at least one material selected from polyethylene (PE), expanded polypropylene (EPP), expanded polystyrene (EPS), and expanded polyolefin (EPO). The first protective layer A611 is made of foam, such as inert foam. In this way, when the buffer zone on the right side wall A130 is subjected to an impact, the first protective layer A611 can effectively absorb the external impact, and additionally, the second protective layer A612 can reduce a deformation of the first shielding member A600a, thereby better reducing a deformation of the right side wall A130 under an external impact.

Of course, in other embodiments, the first protective structure A610 may include more protective layers, such as three or four protective layers. For example, the first protective structure A610 includes a third protective layer, and the third protective layer may be a PE board, an EPP board, or an EPS board. Optionally, the third protective layer is located on a side of the first protective layer A611 away from the second protective layer A612, that is, the first protective layer A611 is located between the second protective layer A612 and the third protective layer. In other words, the middle layer of the first protective structure A610 is foam, and the outer layers on two sides of the middle layer are PE boards, EPP boards, or EPS boards, respectively. Optionally, the third protective layer is disposed between the first protective layer A611 and the second protective layer A612.

As shown in FIGS. 1, 2, 5, and 6, the fixing mechanism A700 includes a first fixing member A711, a first matching member A721, and a second matching member A722. The first fixing member A711 is disposed on the first shielding member A600a. The first matching member A721 is disposed on the base or on a side wall of the body, and is adapted to detachably connect with the first fixing member A711, so that the first shielding member A600a is attached to an outer surface of the side wall. The second matching member A722 is disposed on the top wall A170 and is adapted to detachably connect with the first fixing member A711, so that the first shielding member A600a is attached to the outer surface of the top wall A170, thereby preventing the first shielding member A600a from being accidentally opened.

As shown in FIGS. 3 to 5, the first fixing member A711 is disposed on the first movable end A603 of the first shielding member A600a. The first matching member A721 is disposed on the base A200 or at a position on the body A100 between the first opening A1301 and the base A200. In an embodiment, the first matching member A721 is disposed on the base A200. When the first shielding member A600a is in the first position, the first fixing member A711 detachably connects with the first matching member A721, so that the first movable end A603 is fixed to the base A200, and in this case, the first shielding member A600a covers at least part of the right side wall A130. Specifically, when the first shielding member A600a is in the first position, a lower edge of the first protective structure A610 is aligned with an upper edge of the base A200 (i.e., an upper edge of a right side surface of the base A200), or extends downward beyond the upper edge of the right side surface of the base A200, thereby better buffering potential external impacts on the buffer zone on the right side wall A130. More specifically, the first fixing member A711 and the first matching member A721 are a pair of magnets that can attract each other. The first fixing member A711 is embedded inside the first shielding fabric cover A630, and specifically, the first fixing member A711 is fixed inside the first shielding fabric cover A630 by, for example, sewing. The first matching member A721 is embedded in the base A200. Such an arrangement not only facilitates a detachable connection between the first fixing member A711 and the first matching member A721, thereby preventing the first shielding member A600a from being accidentally opened, but also makes the appearance of the animal carrying device A1000 simpler and more beautiful.

Referring to FIGS. 1, 2, and 6, the second matching member A722 is disposed at a position on the body A100 between the top wall viewing area A171 and the second opening A1201 (i.e., the ventilation mesh sheet A902). In other words, the second matching member A722 is disposed on a side of the top wall viewing area A171 opposite to the first fixed connection portion A101. In an embodiment, the second matching member A722 is a magnet that can attract the first fixing member A711. That is, the first fixing member A711, the first matching member A721, and the second matching member A722 are all magnets. The second matching member A722 is embedded in the top wall A170 of the body A100, and specifically, the second matching member A722 is fixed inside the top wall A170 of the body A100 by sewing. When the first shielding member A600a flips to the second position, the first fixing member A711 and the second matching member A722 attract each other, thereby fixing the first movable end A603 to the body A100, and preventing the first shielding member A600a from being opened accidentally. Thus, when the first shielding member A600a flips between the first position and the second position, the first fixing member A711 can automatically attract the second matching member A722 or the first matching member A721 located at the corresponding position.

Optionally, multiple second matching members A722 may be arranged around the top wall viewing area A171, and multiple first fixing members A711 may be disposed at corresponding positions on the first shielding member A600a, thereby allowing the first shielding member A600a to be fixed to the top wall A170 more stably. Similarly, multiple first matching members A721 may be arranged around the first opening A1301, and multiple first fixing members A711 may be disposed at corresponding positions on the first shielding member A600a, thereby allowing the first shielding member A600a to be fixed to the side wall of the body A100 more stably. Optionally, the first fixing member A711 is a hook, and the first matching member A721 and the second matching member A722 are loops that are adapted to be hooked by the first fixing member A711. Alternatively, the first matching member A721 and the second matching member A722 are hooks, and the first fixing member A711 is a loop, which is not limited in the application.

In an alternative embodiment, the fixing mechanism A700 includes a first fixing member A711, a second fixing member (not shown), a first matching member A721, and a second matching member A722. The first fixing member A711 is disposed on the first shielding member A600a. The first matching member A721 is disposed on the base A200 or on a side wall of the body A100, and is adapted to detachably connect with the first fixing member A711, so that the first shielding member A600a is attached to the outer surface of the side wall. The second fixing member (not shown) is disposed on the first shielding member A600a. The second matching member A722 is disposed on the top wall A170 and adapted to detachably connect with the second fixing member (not shown), so that the first shielding member A600a is attached to the outer surface of the top wall. The first fixing member A711 and the first matching member A721 are a pair of magnets, a pair of snap buttons, or a pair of adhesive buttons, or a zipper capable of being opened or closed, or a hook and a loop matching each other. The second fixing member and the second matching member A722 are, for example, a pair of magnets, a pair of snap buttons, or a pair of adhesive buttons, or a zipper capable of being opened or closed, or a hook and a loop matching each other. The first fixing member A711 and the first matching member A721 matching each other may be identical with or different from the second fixing member and the second matching member A722 matching each other, which is not limited in this application.

According to the animal carrying device A1000 provided in the embodiment, through the first shielding member A600a flipably disposed on the body A100, a user can selectively keep the first shielding member A600a in the second position or in the first position based on an actual environment. When the animal carrying device A1000 is taken outdoors, the first shielding member A600a may be flipped to the second position, i.e., the first shielding member A600a covers the top wall viewing area A171, thereby preventing a pet inside the animal carrying device A1000 from being exposed to sunlight, ensuring air circulation inside the animal carrying device A1000, and also achieving effects of protective buffering. When the first shielding member A600a is flipped to the first position, the first protective structure A610 on the first shielding member A600a can provide excellent protective buffering for the side wall of the animal carrying device A1000. The animal carrying device A1000 in the embodiment achieves effects of both sunlight shielding and excellent protective buffering. Additionally, the flipably arranged first shielding member A600a is easy to be operated and less likely to be lost.

In the embodiment, since only the right side wall A130 of the body A100 is provided with the first protective structure A610, when the animal carrying device A1000 is placed on a vehicle seat for use, the right side wall provided with the first protective structure A610 may be placed adjacent to a vehicle door, thereby reducing potential harm to an animal inside the animal carrying device A1000 caused by an accidental collision with the door.

### Embodiment 2

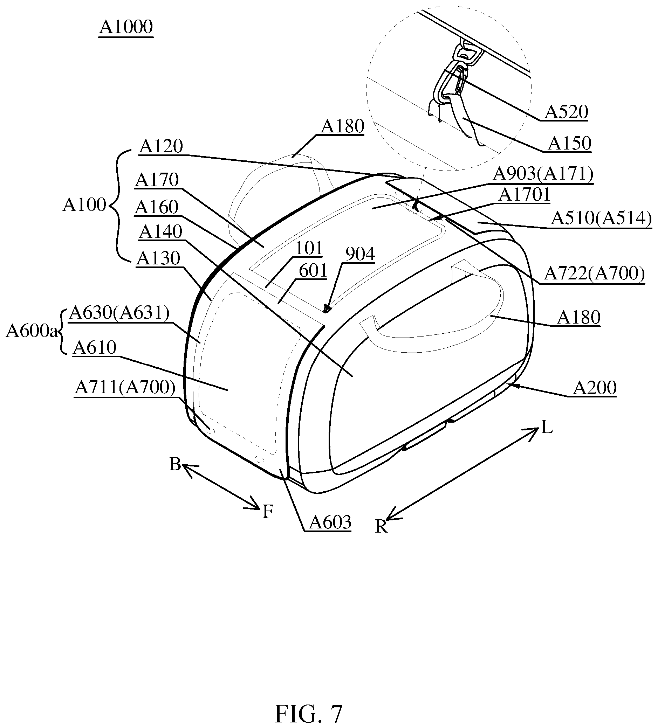

FIG. 7 shows a perspective view of an animal carrying device A1000 according to a second embodiment of the present invention, where the animal carrying device A1000 is provided with a buffer body A510, and the first shielding member A600a is in the first position.

It should be noted that, for the structure of the animal carrying device A1000 in this second embodiment without the buffer body A510, reference may be made to the structure of the animal carrying device A1000 in the first embodiment.

As shown in FIGS. 1 and 7, the animal carrying device A1000 includes the body A100, the base A200, and the first shielding member A600a. The body A100 is disposed on the base A200. The top wall A170 of the body A100 is provided with the top wall viewing area A171, and the top wall viewing area A171 is covered with the top wall ventilation mesh sheet A903. One of the left side wall A120 and the right side wall A130 of the body A100 has the first opening A 1301, and the first opening A1301 is covered with the ventilation mesh sheet A901. The other one of the left side wall A120 and the right side wall A130 of the body A100 has the second opening A1201, and the second opening A1201 is covered with the ventilation mesh sheet A902. In an embodiment, the right side wall A130 has the first opening A1301, and the ventilation mesh sheet A901 is arranged at the first opening A1301. The left side wall A120 has the second opening A1201, and the ventilation mesh sheet A902 is arranged at the second opening A1201. The structure and shape of the ventilation mesh sheet A901 are approximately identical with those of the ventilation mesh sheet A902, respectively, and zones corresponding to the first opening A1301 and the second opening A1201 are buffer zones.

Continuing to refer to FIGS. 1 and 7, the first shielding member A600a is flipably disposed on the body A100 and is provided with the first protective structure A610, and may flip between the second position and the first position. The first pivot end A601 of the first shielding member A600a is connected to a position on the body A100 between the top wall viewing area A171 (i.e., the top wall ventilation mesh sheet A903) and the first opening A1301 (the ventilation mesh sheet), that is, the first pivot end A601 is connected to the first fixed connection portion A101 of the body A100.

This embodiment differs from the first embodiment at least in the following aspects.

As shown in FIG. 7, the animal carrying device A1000 further includes a buffer body A510. The buffer body A510 is detachably disposed on the body A100 by means of a connecting mechanism and covers at least part of another of the multiple side walls of the body A100. In an embodiment, the buffer body A510 covers at least part of the left side wall A120 of the body A100. Optionally, the buffer body A510 may at least partially cover the right side wall A130, and the first shielding member A600a is adapted to at least partially cover the left side wall A140, which is not limited in this application. Referring to FIGS. 1 and 7, the buffer body A510 detachably covers the second opening A1201 (i.e., the ventilation mesh sheet A902) by means of the connecting mechanism. In other words, the buffer body A510 is detachably disposed on the left side wall A140 of the body A100 by means of the connecting mechanism and covers the second opening A1201 (i.e., the buffer zone on the left side wall A120). The shape of the buffer body A510 matches the shape of the second opening A1201, that is, matches the shape of the ventilation mesh sheet A902 on the left side wall A120. In some alternative embodiments, the shape of the buffer body A510 may not match the shape of the second opening A1201, as long as the buffer body A510 can substantially cover the second opening A1201.

In the embodiment, the left side wall A120 is provided with the detachable buffer body A510, and the right side wall A130 is provided with the flipable first protective structure A610, that is, both the left side wall A120 and the right side wall A130 of the animal carrying device A1000 are provided with an anti-collision buffer structure, and either side wall of the animal carrying device A1000 may be placed adjacent to a vehicle door, therefore there is no need to place the animal carrying device A1000 on a specific vehicle seat for use, which not only allows the animal carrying device A1000 to be placed flexibly, thereby enhancing adaptability of the animal carrying device A1000 in use, but also improves impact resistance of the animal carrying device A1000.

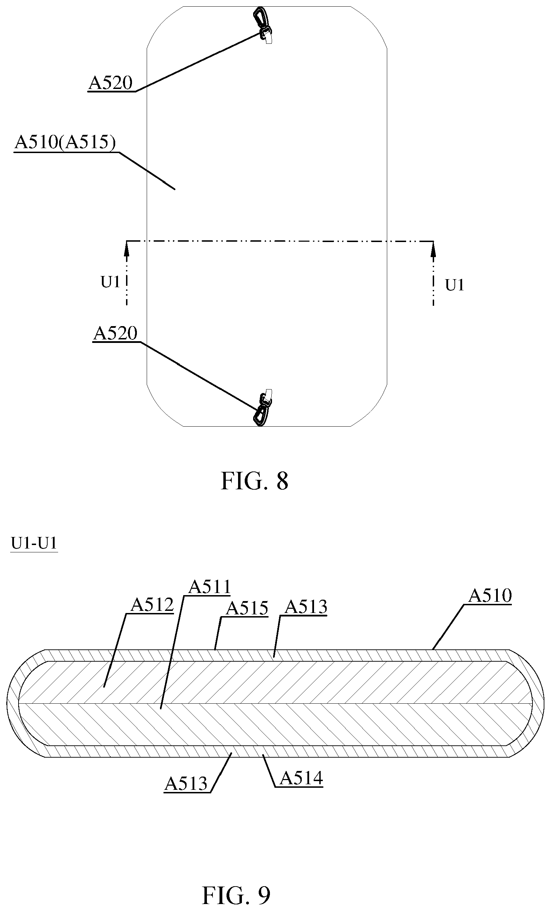

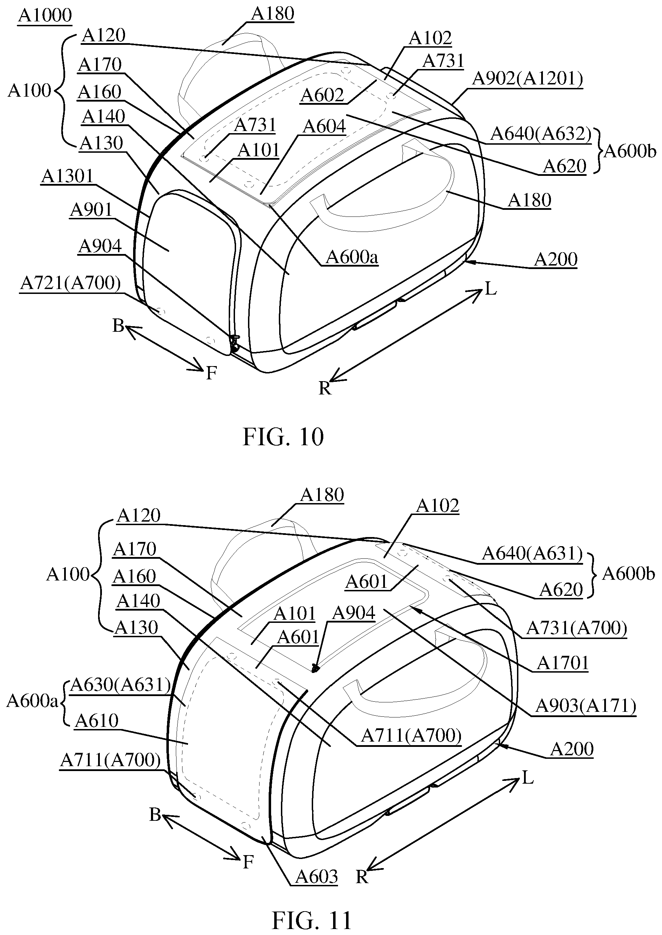

As shown in FIGS. 9 and 10, in an embodiment, the buffer body A510 includes a first buffer layer A511, a second buffer layer A512, and a protective cover A513. The first buffer layer A511 and the second buffer layer A512 are stacked with each other. The protective cover A513 covers the first buffer layer A511 and the second buffer layer A512. The protective cover A513 can not only prevent the first buffer layer A511 and the second buffer layer A512 of the buffer body A510 from being separated from each other during use, but also facilitate the installation of the buffer body A510 on the body A100. The buffer body A510 has a back surface A515 facing the body A100 and a front surface A514 away from the body A100. A side of the body A100 facing the buffer body A510 is provided with a ventilation mesh sheet. A side of the protective cover A513 away from the body A100 forms the front surface A514 of the buffer body A510.

The first buffer layer A511 is farther from the body A100 than the second buffer layer A512, that is, the second buffer layer A512 is proximate to the body A100. In other words, the first buffer layer A511 is arranged to be proximate to the front surface A514 of the buffer body A510, and the second buffer layer A512 is arranged to be proximate to the back surface A515 of the buffer body A510. The first buffer layer A511 has better elasticity than the second buffer layer A512. Specifically, the second buffer layer A512 is a plate-like structure made of at least one material selected from EPP foam, EPS foam, and EPO foam. The first buffer layer A511 is made of foam. The buffer body A510 can not only effectively absorb external impacts but also reduce the deformation of the ventilation mesh sheet of the body A100 under the external impacts.

Of course, in other embodiments, the buffer body A510 may include more buffer layers, such as three or four buffer layers. Exemplarily, the buffer body A510 is provided with a third buffer layer, and the third buffer layer is disposed between the first buffer layer A511 and the second buffer layer A512, or is disposed on one side of the first buffer layer A511. The third buffer layer may be a PE board or an EPP board.

As shown in FIGS. 7 and 8, in an embodiment, the connecting mechanism includes a first engaging portion A520 and a second engaging portion A150. The buffer body A510 is provided with multiple first engaging portions A520, and the multiple first engaging portions A520 are disposed on a back surface A515 of the buffer body A510. Correspondingly, the body A100 is provided with multiple second engaging portions A150, and the multiple first engaging portions A520 are adapted to engage with and connect with the multiple second engaging portions A150, so that the buffer body A510 can substantially cover the buffer zone. The multiple second engaging portions A150 are located on two opposite sides of the second opening A1201, respectively. Exemplarily, the multiple second engaging portions A150 are located at an upper side of the second opening A1201 (that is, the second engaging portions A150 are disposed at a position on the body A100 between the second opening A1201 and the top wall viewing area A171) and at a lower side of the second opening A1201 (that is, the second engaging portions A150 are disposed on the base A200 or at a position on the body A100 between the base A200 and the second opening A1201). Alternatively and exemplarily, the second engaging portions A150 are located at the left and right sides of the second opening A1201, respectively. The positions of the multiple first engaging portions A520 correspond to the positions of the multiple second engaging portions A150 respectively. Specifically, the buffer body A510 is roughly strip-shaped, and the first engaging portions A520 are disposed on two ends of the buffer body A510, respectively. The multiple first engaging portions A150 are disposed proximate to the edges of the buffer body A510 respectively. More specifically, the multiple first engaging portions A150 are disposed at upper and lower ends of the buffer body A510, respectively.

As shown in FIG. 7, one of the first engaging portion A520 and the second engaging portion A150 is a hook, and the other one of the first engaging portion A520 and the second engaging portion A150 is a clasp. The hook is adapted to hook onto the clasp. In an embodiment, the first engaging portions A520 disposed on the buffer body A510 are hooks, and the second engaging portions A150 disposed on the body A100 are clasps. The clasps may be formed by straps sewn onto the body A100. In some alternative embodiments, the first engaging portion A520 and the second engaging portion A150 are, for example, a pair of adhesive buttons or snap buttons disposed on the body A100 and the buffer body A510, respectively, which is not limited in this application.

### Embodiment 3

FIGS. 10 and 11 show perspective views of the animal carrying device A1000 according to a third embodiment of the present invention, respectively. In FIG. 10, the first shielding member A600a of the animal carrying device A1000 is in the second position, and a second shielding member A600b is in a fourth position. In FIG. 11, the first shielding member A600a of the animal carrying device A1000 is in the first position, and the second shielding member A600b is in a third position.

As shown in FIGS. 10 and 11, the animal carrying device A1000 includes the body A100, the base A200, the first shielding member A600a, and the second shielding member A600b. The body A100 is disposed on the base A200. The top wall A170 of the body A100 has the top wall viewing area A171, and the top wall viewing area A171 is covered with the top wall ventilation mesh sheet A903. One of the left side wall A120 and the right side wall A130 of the body A100 has the first opening A1301, and the first opening A1301 is covered with the ventilation mesh sheet A901. The other one of the left side wall A120 and the right side wall A130 of the body A100 has the second opening A1201, and the second opening A1201 is covered with the ventilation mesh sheet A902. In an embodiment, the right side wall A130 has the first opening A1301, and the ventilation mesh sheet A901 is arranged at the first opening A1301. The left side wall A120 has the second opening A1201, and the ventilation mesh sheet A902 is arranged at the second opening A1201. The structure and shape of the ventilation mesh sheet A901 are approximately identical with those of the ventilation mesh sheet A902, respectively, and zones corresponding to the first opening A1301 and the second opening A1201 are the buffer zones.

For the structure of the first shielding member A600a, refer to the structure of the first shielding member A600a of the animal carrying device A1000 of the first embodiment, which will not be repeatedly described herein.

The animal carrying device A1000 in this embodiment differs from the animal carrying device A1000 in the first embodiment at least in the following aspects.

Referring to FIGS. 10 to 12, the second shielding member A600b is flipably disposed on the body A100 and provided with a second protective structure A620. One end of the second shielding member A600b serves as a second pivot end A602 and is connected to the body A100, thus allowing the second shielding member A600b to flip between the third position and the fourth position. The fourth position is a sunlight shielding position, where sunlight can be prevented from shining into the body A100 passing through the top wall A170. The third position is a protective position, which can buffer potential impacts on the side walls of the body A100. The second shielding member A600b also has a second movable end A604 opposite to the first pivot end A601. Specifically, the second pivot end A602 is connected to a position on the body A100 between the top wall viewing area A171 and the second opening A1201. In other words, the body A100 has a second fixed connection portion A102 connected to the second pivot end A602 of the second shielding member A600b, and the second fixed connection portion A102 is located between the top wall viewing area A171 and the second opening A1201. The second fixed connection portion A102 may be located on the top wall A170 of the body A100 or on the left side wall A120 of the body A100. In other embodiments not shown, other shielding members (not shown) may also be provided, which is not limited in this application.

As shown in FIGS. 10 to 12, the structure of the second shielding member A600b is substantially identical with the structure of the first shielding member A600a. The second shielding member A600b is an elastic member. The second shielding member A600b is adapted to be connected to the first shielding member A600a, the body A100, or the base A200 by means of the fixing mechanism A700, so that the second shielding member A600b is adapted to be attached to the outer surface of the top wall A170 of the body A100 or adapted to be attached to another of the multiple side walls of the body A100. In other words, the second shielding member A600b may be fixed to at least one of the top wall A170 and the side walls of the body A100 by means of the fixing mechanism A700.

Referring to FIG. 11, when the second shielding member A600b is in the third position, the second protective structure A620 covers at least part of the other one of the multiple side walls of the body A100, thereby buffering potential external impacts on the side wall. In this case, the second shielding member A600b is connected to the side wall of the body A100 or the base A200 by means of the fixing mechanism A700, so that the second shielding member A600b is attached to the outer surface of the side wall of the body A100. Specifically, when the second shielding member A600b is in the third position, the first protective structure A610 of the second shielding member A600b covers at least part of the left side wall A120. More specifically, the second protective structure A620 of the second shielding member A600b covers the second opening A1201, that is, the second shielding member A600b covers the ventilation mesh sheet A902 (i.e., covers the buffer zone on the left side wall A120), thereby buffering potential external impacts on the buffer zone of the left side wall A120. Optionally, the positions of the first shielding member A600a and second shielding member A600b can be exchanged, which is not limited in this application.

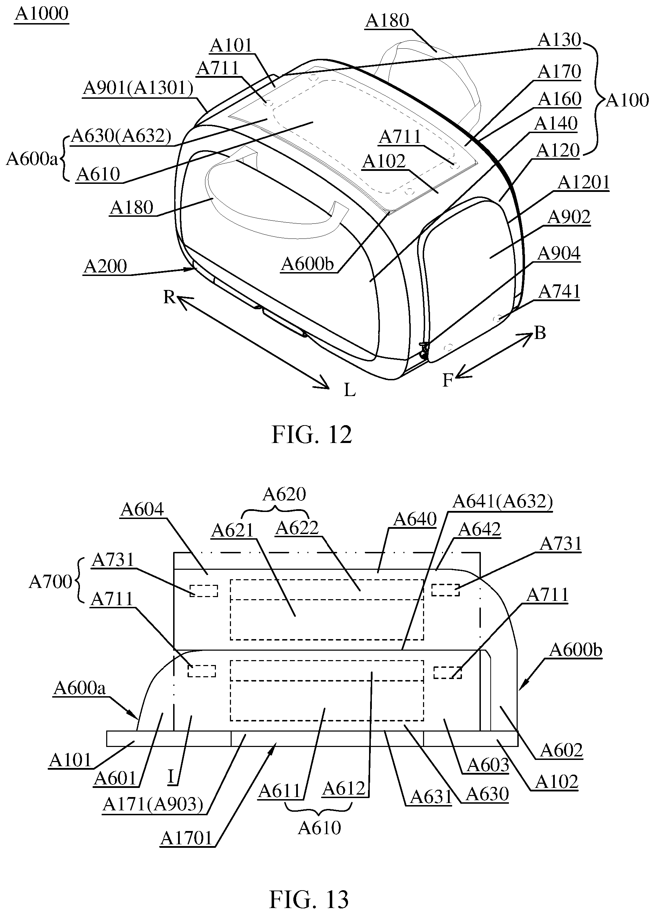

Referring to FIGS. 10, 12, and 13, when the first shielding member A600a is in the second position and the second shielding member A600b is in the fourth position, the first shielding member A600a and the second shielding member A600b jointly cover the top wall viewing area A171, that is, jointly cover the top wall ventilation mesh sheet A903, which not only blocks sunlight, thereby preventing the sunlight from entering the carrying space A103 directly, but also appropriately buffers potential external impacts on the top wall. Specifically, when the first shielding member A600a is in the second position and the second shielding member A600b is in the fourth position, the first shielding member A600a and the second shielding member A600b at least partially overlap. As shown in FIG. 13, when the first shielding member A600a and the second shielding member A600b overlap, the overlapping region thereof is the overlapping region I. The overlapping region I may completely or partially cover the top wall viewing area A 171. In other words, the overlapping of the two shielding members 600 includes implementations as follows: the two shielding members 600 completely or partially overlap, the overlapping region I completely covers the top wall viewing area A171, and each shielding member 600 completely covers the top wall viewing area A171; the two shielding members 600 partially overlap, the overlapping region I partially covers the top wall viewing area A171, one of the two shielding members 600 completely covers the top wall viewing area A171, and the other one of the two shielding members 600 partially covers the top wall viewing area A171; and the two shielding members 600 partially overlap, the overlapping region I partially covers the top wall viewing area A171, and each shielding member 600 partially covers the top wall viewing area A171.

The shape of the second protective structure A620 of the second shielding member A600b matches the shape of the second opening A1201 (i.e., the buffer zone on the left side wall A120), that is, matches the shape of the ventilation mesh sheet A902 on the left side wall A120. In some alternative embodiments, the shape of the second protective structure A620 may not match the shape of the ventilation mesh sheet A902, as long as the second protective structure A620 can substantially cover the ventilation mesh sheet A902.

As shown in FIGS. 10 and 13, the second shielding member A600b has a first surface A641 and a second surface A642 opposite to each other. The second surface A642 of the second shielding member A600b is adapted to face a side wall (i.e., the left side wall A120) of the body A100. The second shielding member A600b includes a second shielding fabric cover A640, and the second protective structure A620 is disposed inside the second shielding fabric cover A640. The second shielding fabric cover A640 is a multi-layer fabric structure, that is, the second protective structure A620 is disposed between adjacent fabric layers. Specifically, the multi-layer fabrics are connected by, for example, sewing, bonding, or heat welding. The second shielding fabric cover A640 forms the first surface A641 and the second surface A642, respectively. One end of the second shielding fabric cover A640 forms the second pivot end A602, and the other end thereof forms the second movable end A604. The second pivot end A602 is fixedly connected to the second fixed connection portion A102 by, for example, sewing. Optionally, the second pivot end A602 is fixedly connected to the second fixed connection portion A102 by welding, bonding, or other means, or the second pivot end A602 is detachably connected to the second fixed connection portion A102 by means of components matching each other (e.g., a hook and a clasp matching each other, a zipper capable of being opened or closed, etc.).

The second protective structure A620 includes a first protection layer A621 and a second protection layer A622. The second protection layer A622 and the first protection layer A621 are stacked with each other, and the second protection layer A622 is farther from the first surface A641 than the first protection layer A621. In other words, when the second shielding member A600b is in the third position, the second surface A642 faces the second opening A1302 (that is, faces the ventilation mesh sheet A902), and the first protection layer A621 is farther from the second opening A1302 than the second protection layer A622.

The first protection layer A621 is similar to the first protective layer A611, and the second protection layer A622 is similar to the second protective layer A612. The first protection layer A621 has better elasticity than the second protection layer A622. The second protection layer A622 is a plate-like structure made of at least one material selected from PE, EPP, EPS, and EPO. The first protection layer A621 is made of foam, such as inert foam. In this way, when the buffer zone on the left side wall A120 is subjected to an impact, the first protection layer A621 can effectively absorb the external impact, while the second protection layer A622 can reduce the deformation of the second shielding member A600b, thereby better reducing a deformation of the left side wall A120 under the external impact.

Of course, in other embodiments, the second protective structure A620 may include more protective layers, such as three or four protective layers. For example, the second protective structure A620 includes a third protective layer, and the third protective layer may be a PE board, an EPP board, or an EPS board. Optionally, the third protective layer is located on a side of the first protection layer A621 away from the second protection layer A622, that is, the first protection layer A621 is located between the second protection layer A622 and the third protective layer. In other words, the middle layer of the second protective structure A620 is foam, and the outer layers on two sides of the middle layer are PE boards, EPP boards, or EPS boards, respectively. Optionally, the third protective layer is located between the first protection layer A621 and the second protection layer A622.

Referring to FIGS. 10 to 13, the fixing mechanism A700 includes a first securing member A731, a first adapter member A741, a first matching member A721, and a first fixing member A711. The first securing member A731 is disposed on the second shielding member A600b. The first adapter member A741 is disposed on the base A200 or on a side wall (i.e., the left side wall A120) of the body A100. Specifically, the first adapter member A741 is disposed on the base A200. The first adapter member A741 is adapted to detachably connect with the first securing member A731, so that the second shielding member A600b may be attached to an outer surface of the side wall of the body A100. The first matching member A721 is disposed on the base A200 or a side wall (i.e., the right side wall A130) of the body A100. Specifically, the first matching member A721 is disposed on the base A200. The first fixing member A711 is disposed on the first shielding member A600a. The first fixing member A711 is adapted to detachably connect with the first matching member A721, so that the first shielding member A600a may be attached to the outer surface of the side wall (i.e., the right side wall A130) of the body A100. The first fixing member A711 is adapted to detachably connect with the first securing member A731, thereby connecting the second shielding member A600b and the first shielding member A600a, so that the first shielding member A600a and the second shielding member A600b jointly cover the top wall viewing area A171.

The first fixing member A711 and the first matching member A721 are magnets that can attract each other. The first fixing member A711 is embedded in the first shielding fabric cover A630, and the first matching member A721 is embedded in the base A200, and specifically, the first matching member A721 is embedded in a right side surface of the base A200. The first securing member A731 and the first adapter member A741 are magnets that can attract each other. The first securing member A731 is embedded in the second shielding fabric cover A640, and the first adapter member A741 is embedded in the base A200, and specifically the first adapter member A741 is embedded in a left side of the base A200. The first fixing member A711 and the first securing member A731 are magnets that can attract each other. That is, the first fixing member A711, the first matching member A721, the first securing member A731, and the first adapter member A741 are all magnets. The respective numbers of the first fixing member A711, the first matching member A721, the first securing member A731, and the first adapter member A741 may be one or multiple, and may be identical or different, which is not limited in this application, as long as the mutual engagement relationship can be satisfied.

When the first shielding member A600a is in the first position, the first fixing member A711 and the first matching member A721 attract each other. When the second shielding member A600b is in the third position, the first securing member A731 and the first adapter member A741 attract each other. In an embodiment, as shown in FIGS. 11 and 12, when the second shielding member A600b is in the third position, a lower edge of the second protective structure A620 is aligned with an upper edge of the base A200 adjacent to the left side wall A120 of the body A100 (i.e., the upper edge of a left side of the base A200) or extends downward beyond the upper edge of the left side of the base A200, thereby better buffering potential external impacts on the buffer zone on the left side wall A120. Referring to FIGS. 12 and 13, when the first shielding member A600a is in the second position and the second shielding member A600b is in the fourth position, the first fixing member A711 and the first securing member A731 attract each other, thereby connecting the first shielding member A600a and the second shielding member A600b. In this way, both the first shielding member A600a and the second shielding member A600b are fixed to the top wall A170 of the body A100, thus preventing the first shielding member A600a and the second shielding member A600b from being accidentally opened. Referring to FIG. 13, when the first shielding member A600a is in the second position and the second shielding member A600b is in the fourth position, the first shielding member A600a and the second shielding member A600b overlap, specifically the two shielding members 600 completely overlap, and their overlapping region I completely covers the top wall ventilation mesh sheet A903 (i.e., the top wall viewing area A171). Referring to FIGS. 10 and 13, in an embodiment, when the first shielding member A600a and the second shielding member A600b overlap, at least part of the second shielding member A600b is located on the first shielding member A600a, and the first securing member A731 and the first fixing member A711 are both located in the overlapping region I. In another embodiment, as shown in FIG. 12, when the first shielding member A600a and the second shielding member A600b overlap, at least part of the first shielding member A600a may be located on the second shielding member A600b.

Optionally, the second matching member A722 may be arranged by referencing the animal carrying device A1000 in the first embodiment. As shown in FIGS. 1 and 2, the second matching member A722 is, for example, a magnet. The second matching member A722 is embedded in the top wall A170 of the body A100. When the first shielding member A600a is in the second position and the second shielding member A600b is in the fourth position, the first fixing member A711 and the first securing member A731 attract each other, and thus the first fixing member A711 and the second matching member A722 attract each other, thereby connecting the first shielding member A600a and the second shielding member A600b and fixing them to the top wall A170. In this way, the first shielding member A600a and the second shielding member A600b are fixed to the top wall A170 more stably.

### Embodiment 4

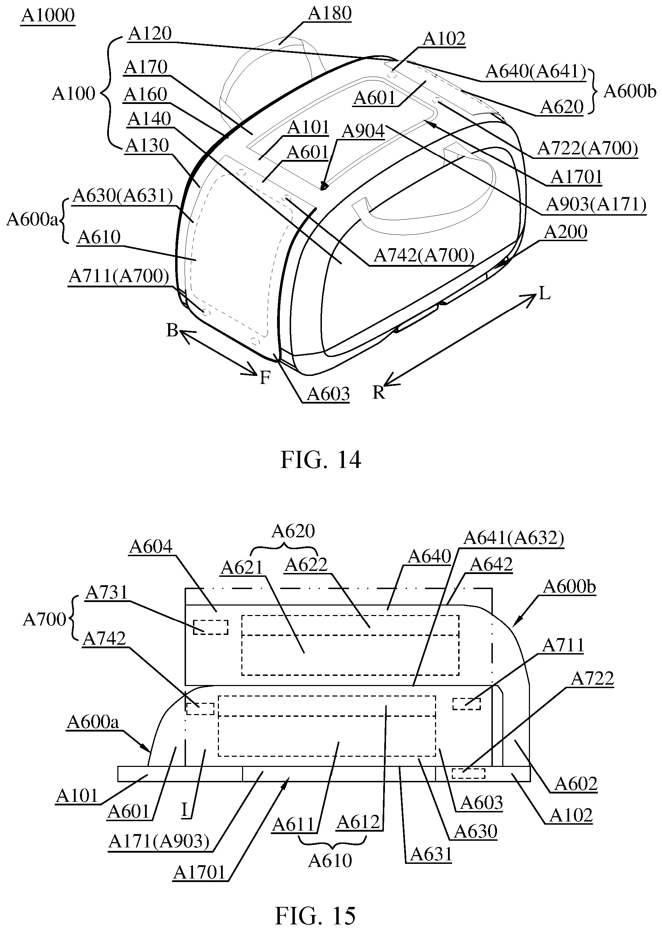

FIG. 14 shows a perspective view of an animal carrying device A1000 according to a fourth embodiment of the present invention, where the first shielding member A600a is in the first position and the second shielding member A600b is in the third position. The animal carrying device A1000 in this embodiment differs from the third embodiment at least in the following aspects.

As shown in FIGS. 14 and 15, the animal carrying device A1000 is provided with a fixing mechanism A700. The fixing mechanism A700 includes the first fixing member A711, the first matching member A721 (see FIG. 10), the second matching member A722, the first securing member A731, the first adapter member A741, and the second adapter member A742. For the arrangement of the first fixing member A711, the first matching member A721, and the second matching member A722, reference may be made to the first embodiment. As shown in FIGS. 1 and 2, the first fixing member A711 is disposed on the first shielding member A600a. The first matching member A721 is disposed on the base A200 or a side wall (i.e., the right side wall A130) of the body A100, and the first matching member A721 is adapted to detachably connect with the first fixing member A711, so that the first shielding member A600a is attached to the outer surface of the side wall. The second matching member A722 is disposed on the top wall A170, and the second matching member A722 is adapted to detachably connect with the first fixing member A711, so that the first shielding member A600a is attached to the outer surface of the top wall A170, thereby preventing the first shielding member A600a from being accidentally opened. Specifically, the first fixing member A711 is disposed on the first movable end A603 of the first shielding member A600a. The first matching member A721 is disposed on the base A200. The second matching member A722 is disposed at a position on the body A100 between the top wall viewing area A171 and the second opening A1201 (i.e., the ventilation mesh sheet A902). In an embodiment, the first fixing member A711, the first matching member A721, and the second matching member A722 are all magnets.

Referring to FIGS. 14 and 15, the first securing member A731 is disposed on the second shielding member A600b. For the arrangement of the first adapter member A741, reference may be made to the third embodiment. As shown in FIG. 12, the first adapter member A741 is disposed on the base A200 or on a side wall of the body A100 (i.e., the left side wall A120). Specifically, the first adapter member A741 is disposed on the base A200. The first adapter member A741 is adapted to detachably connect with the first securing member A731, so that the second shielding member A600b is attached to the outer surface of the side wall of the body A100. The second adapter member A742 is disposed on the first shielding member A600a, and the second adapter member A742 is adapted to detachably connect with the first securing member A731, thereby connecting the second shielding member A600b and the first shielding member A600a, so that the first shielding member A600a and the second shielding member A600b jointly cover the top wall viewing area A171. In an embodiment, the first securing member A731, the first adapter member A741, and the second adapter member A742 are magnets that can attract each other. The first securing member A731 is embedded in the second shielding member A600b, the first adapter member A741 is embedded in the base A200, and the second adapter member A742 is embedded in the first shielding member A600a. When the first shielding member A600a is in the second position and the second shielding member A600b is in the fourth position, the first fixing member A711 attracts the second matching member A722, and the first securing member A731 attracts the second adapter member A742, thereby connecting the first shielding member A600a and the second shielding member A600b and fixing them to the top wall A170. In this case, the second shielding member A600b and the first shielding member A600a at least partially overlap.

In an alternative embodiment, the fixing mechanism A700, in addition to including the first fixing member A711, the first matching member A721, and the second matching member A722 in the first embodiment, further includes a first securing member A731, a second securing member (not shown), a first adapter member A741, and a second adapter member A742. The first securing member A731 and the second securing member are disposed on the second shielding member A600b, the first adapter member A741 is disposed on the base A200 or the side wall of the body A100, and the second adapter member A742 is disposed on the first shielding member A600a. The first adapter member A741 is adapted to detachably connect with the first securing member A731, and the second adapter member A742 is adapted to detachably connect with the second securing member. The first securing member A731 and the first adapter member A741 are a pair of magnets, a pair of snap buttons, a pair of adhesive buttons, or a zipper capable of being opened or closed, or a hook and a loop matching each other. The second securing member and the second adapter member A742 are, for example, a pair of magnets, a pair of snap buttons, a pair of adhesive buttons, or a zipper capable of being opened or closed, or a hook and a loop matching each other. The first securing member A731 and the first adapter member A741 may be identical with or different from the second securing member and the second adapter member A742, which is not limited in this application.

### Embodiment 5

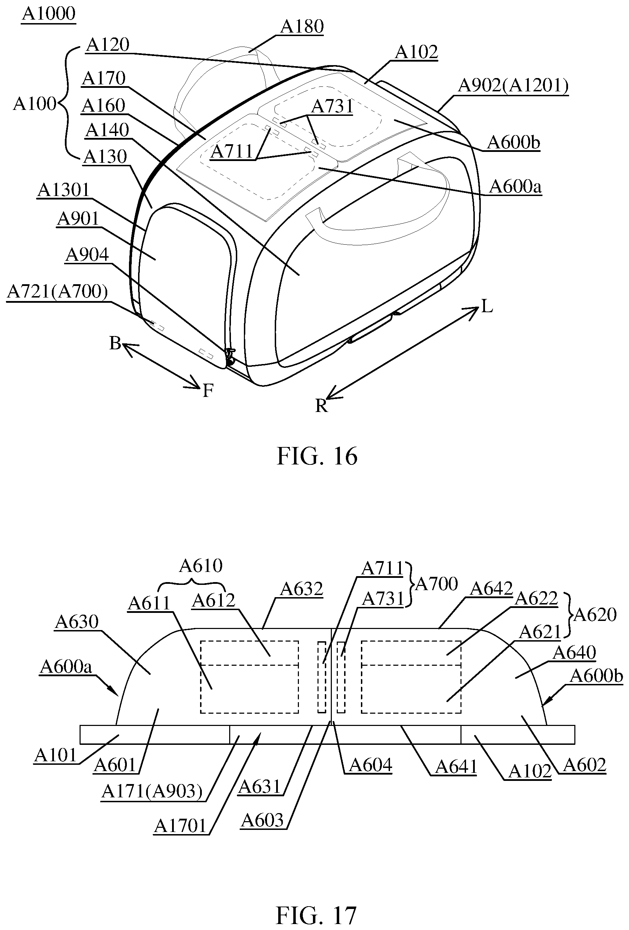

FIG. 16 is a schematic structural diagram showing the first shielding member A600a and the second shielding member A600b of an animal carrying device A1000 connected to the top wall A170 according to a fifth embodiment of the present invention.

As shown in FIG. 16, the animal carrying device A1000 includes the base A200, the body A100 disposed on the base A200, and the first shielding member A600a and the second shielding member A600b flipably disposed on the body A100. The animal carrying device A1000 in this embodiment differs from the animal carrying device A1000 in the third embodiment at least in the following aspects.

As shown in FIG. 17, when the first shielding member A600a is in the second position and the second shielding member A600b is in the fourth position, the first shielding member A600a and the second shielding member A600b do not overlap, and the first movable end A603 of the first shielding member A600a and the second movable end A604 of the second shielding member A600b are in contact with each other. In other words, when the first shielding member A600a and the second shielding member A600b are in the sunlight shielding positions (i.e., the second position and the fourth position) respectively, they are located in the same plane, and the first shielding member A600a covers part of the top wall viewing area A171 and the second shielding member A600b covers the other part of the top wall viewing area A171.

The fixing mechanism A700 includes the first securing member A731, the first adapter member A741, the first matching member A721, and the first fixing member A711. The first fixing member A711 is disposed on the first shielding member A600a, and the first securing member A731 is disposed on the second shielding member A600b. Specifically, the first securing member A731 is disposed on the second movable end A604 of the second shielding member A600b, and the first fixing member A711 is disposed on the first movable end A603 of the first shielding member A600a. When the first shielding member A600a is in the second position and the second shielding member A600b is in the fourth position, the first fixing member A711 and the first securing member A731 engage with each other, thereby connecting the first shielding member A600a and the second shielding member A600b together. The first matching member A721 is disposed on the right side wall A130 of the body A100 or on the base A200. When the first shielding member A600a is in the first position, the first fixing member A711 engages with the first matching member A721, so that the first shielding member A600a is attached to the right side wall A130. For the arrangement of the first adapter member A741, reference may be made to the third embodiment. As shown in FIG. 12, the first adapter member A741 is disposed on the left side wall A120 of the body A100 or on the base A200. When the second shielding member A600b is in the third position, the first securing member A731 and the first adapter member A741 attract each other, so that the second shielding member A600b is attached to the left side wall A120.

In an embodiment, the first securing member A731 is, for example, a magnet or hook; correspondingly, the first adapter member A741 is, for example, a magnet or loop; correspondingly, the first fixing member A711 is, for example, a magnet or loop; and correspondingly, the first matching member A721 is, for example, a magnet or hook. In other words, the first securing member A731 and the first matching member A721 are the same and both are either a magnet or a hook; and the first adapter member A741 and the first fixing member A711 are the same and both are either a magnet or a loop. Of course, the first securing member A731 may also be a magnet or a loop, and the first adapter member A741, the first matching member A721, and the first fixing member A711 are adjusted correspondingly.

### Embodiment 6

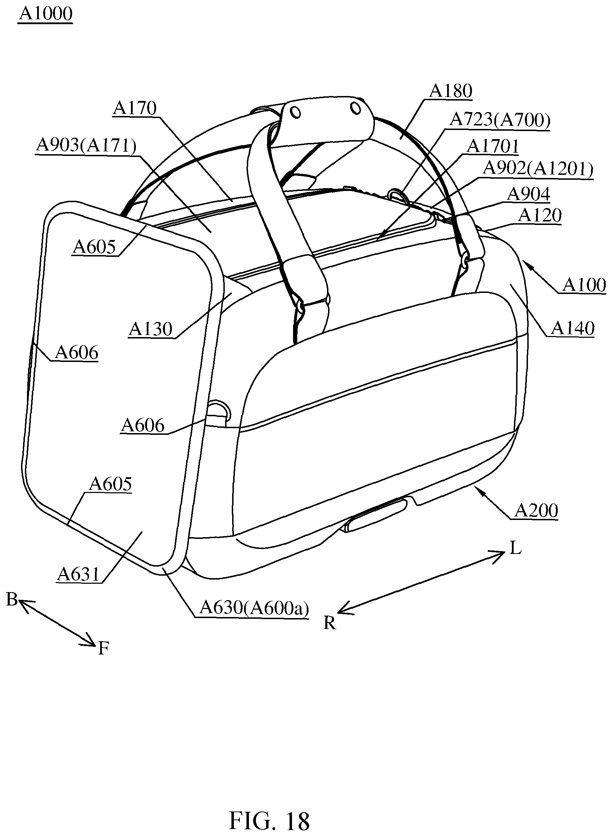

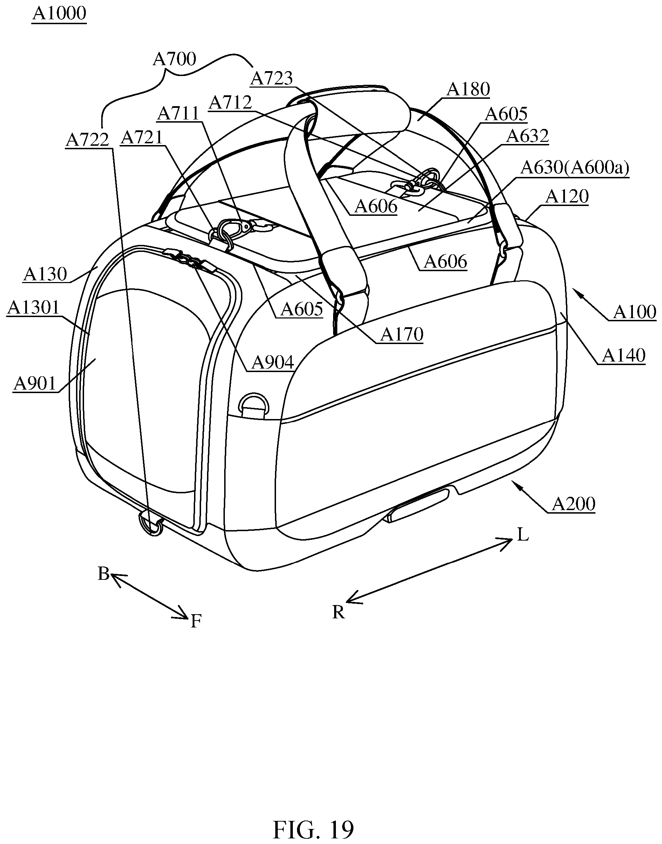

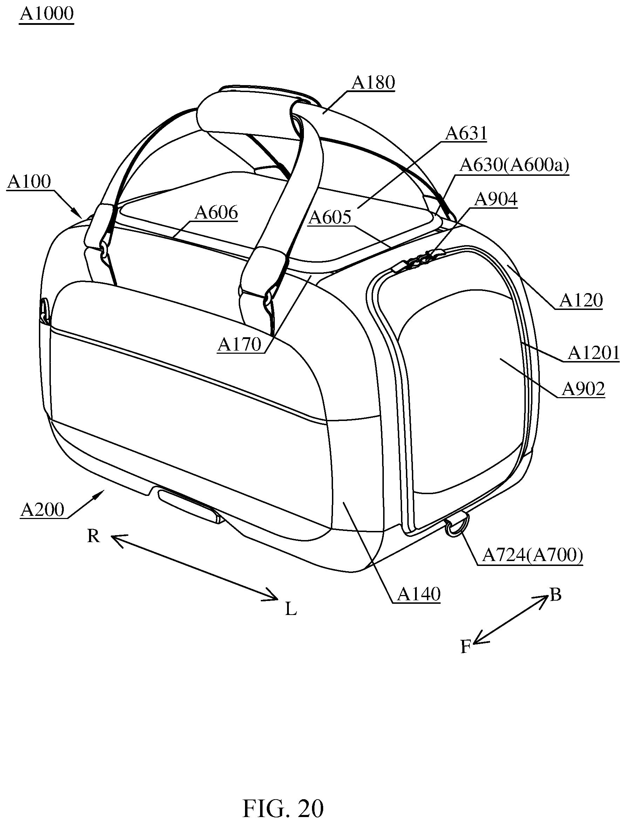

FIGS. 18 to 20 show schematic structural diagrams of an animal carrying device A1000 according to a sixth embodiment of the present invention. The first shielding member A600a in FIG. 18 is installed forward in the first position, the first shielding member A600a in FIG. 19 is installed reversely in the second position, and the first shielding member A600a in FIG. 20 is installed forward in the second position.

As shown in FIGS. 18 to 20, the animal carrying device A1000 includes the body A100, the base A200, and the first shielding member A600a. For the structures of the body A100 and the base A200, reference may be made to the body A100 and the base A200 in the first embodiment, which are not repeatedly described herein. The animal carrying device A1000 in this embodiment differs from the animal carrying device A1000 in the first embodiment at least in the following aspects.

Referring to FIGS. 18 to 20, the first shielding member A600a is detachably connected to the body A100 through a fixing mechanism A700, so that the first shielding member A600a may be selectively arranged to be in the first position (also referred to as the protective position) or the second position (also referred to as the sunlight shielding position). The fixing mechanism A700 includes a first fixing member A711, a second fixing member A712, a first matching member A721, and a second matching member A722. The first fixing member A711 and the second fixing member A712 are disposed on a second side surface A632 of the first shielding member A600a. The first matching member A721 is adapted to detachably connect with the first fixing member A711. The second matching member A722 is adapted to detachably connect with the second fixing member A712. The first matching member A721 is disposed on the body A100 and located on one side of the top wall viewing area A171 adjacent to the one of the multiple side walls. Specifically, the first matching member A721 is located on the side of the top wall viewing area A171 adjacent to the right side wall A130. The second matching member A722 is disposed on the one of the multiple side walls of the body A100 or on the base A200. Specifically, the second matching member A722 is disposed on the right side wall A130 of the body A100 or on the right side surface of the base A200. Optionally, the first matching member A721 is located at an upper side of the first opening A1301 in the right side wall A130, and the second matching member A722 is located at a lower side, a left side, or a right side of the first opening A1301. In an embodiment, the first matching member A721 and the second matching member A722 are located at the upper and lower sides of the first opening A1301 (equivalent to the ventilation mesh sheet A901) respectively, and the first matching member A721 is disposed at a position on the body A100 between the top wall viewing area A171 and the first opening A1301 in the right side wall A130. As shown in FIGS. 18 and 19, when the first fixing member A711 connects with the first matching member A721, and when the second fixing member A712 connects with the second matching member A722, the first shielding member A600a is restrained in the first position. When the first fixing member A711 connects with the first matching member A721 but the second fixing member A712 is not connected, the first shielding member A600a can flip between the first position and the second position.

In some embodiments not shown, the fixing mechanism A700 may not be provided with the second fixing member A712 and the second matching member A722. Through a detachable connection between the first fixing member A711 and the first matching member A721, one end of the first shielding member A600a is connected at a position between the top wall viewing area A171 and the first opening A1301, while the other end thereof can move relative to the body A100, so that the first shielding member A600a can flip between the first position and the second position, thereby enabling the first shielding member A600a to switch between the first position and the second position.

As shown in FIGS. 18 to 20, the fixing mechanism A700 further includes a third matching member A723. The third matching member A723 is adapted to detachably connect with the second fixing member A712. The third matching member A723 is disposed at another side of the top wall viewing area A171, that is, disposed at the side of the top wall viewing area A171 adjacent to the other one of the multiple side walls of the body A100. Optionally, the other one of the multiple side walls of the body A100 may be opposite or adjacent to the one of the multiple side walls of the body A100. In an embodiment, the first matching member A721 is disposed at a position on the body A100 between the top wall viewing area A171 and the first opening A1301 in the right side wall A130, and the third matching member A723 is disposed at a position on the body A100 between the top wall viewing area A171 and the second opening A1201 in the left side wall A120. In other words, the first matching member A721 and the third matching member A723 are disposed at the left and right sides of the top wall viewing area A171 respectively. When the first fixing member A711 connects with the first matching member A721, and when the second fixing member A712 connects with the third matching member A723, the first shielding member A600a is restrained in the second position.

As shown in FIGS. 18 to 20, the first shielding member A600a has a first side surface A631 and a second side surface A632, and can be installed forward or reversely on the body A100. As shown in FIG. 20, a forward installation means that the second side surface A632 of the first shielding member A600a is installed to face the body A100. As shown in FIG. 19, a reverse installation means that the first side surface A631 of the first shielding member A600a is installed to face the body A100, i.e., the second side surface A632 of the first shielding member A600a is installed to face away from the body A100. The first fixing member A711 and the second fixing member A712 are disposed on the second side surface A632 of the first shielding member A600a. When the first shielding member A600a is to be installed in the second position, the first shielding member A600a may be installed forward on the top wall A170 of the body A100, or may be installed reversely on the top wall A170, as long as the first shielding member A600a can completely cover the top wall viewing area A171. That is, when the first shielding member A600a is in the second position, the first shielding member A600a has a reverse installation mode where the first side surface A631 faces the top wall viewing area A171 and a forward installation mode where the first side surface A631 faces away from the top wall viewing area A171. When the first shielding member A600a is installed in the second position in the forward installation mode, at least part of the fixing mechanism A700 is covered by the first shielding member A600a. Specifically, the first fixing member A711 and the second fixing member A712 are located between the first shielding member A600a and the body A100 and are covered by the first shielding member A600a.

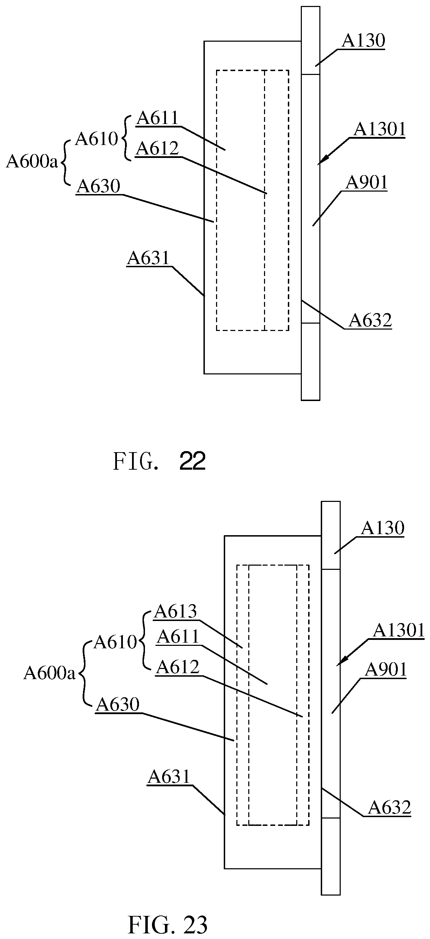

As shown in FIG. 22, the first shielding member A600a includes a first shielding fabric cover A630 and a first protective structure A610 disposed inside the first shielding fabric cover A630. One side of the first shielding fabric cover A630 forms the first side surface A631, and the other side forms the second side surface A632. The first fixing member A711 and the second fixing member A712 are disposed on the first shielding fabric cover A630. For the first protective structure A610 in this embodiment, reference may be made to the first protective structure A610 in the first embodiment, which is not described repeatedly herein. When the first shielding member A600a is installed in the first position, the first protective structure A610 at least covers the first opening A1301 in the right side wall A130, and the first shielding member A600a needs to be installed forward on the body A100, thereby enabling the first protective structure A610 on the first shielding member A600a to better perform a protective function.

In an embodiment, the first fixing member A711 is spaced a pre-determined distance from an outer edge of the first shielding member A600a, and the predetermined distance ensures that when the first side surface A631 of the first shielding member A600a faces one of the multiple side walls of the body A100 (e.g., the right side wall A130) (that is, when the first shielding member A600a is installed reversely in the first position), at least one of the first fixing member A711 and the second fixing member A712 is not able to connect with the corresponding first matching member A721 or the corresponding second matching member A722 easily. It should be noted that at least one of the first fixing member A711 and the second fixing member A712 being not able to connect with the corresponding first matching member A721 or the corresponding second matching member A722 easily means that, for example, it is difficult for the first fixing member A711 to connect with the first matching member A721 and it is difficult for the second fixing member A712 to connect with the second matching member A722 without bending or deforming the first shielding member A600a, and in other words, when installed reversely in the first position, the first shielding member A600a will bend or deform, for example, a portion of the first shielding member A600a between the outer edges arches upward. In this way, a user can judge whether the first shielding member A600a is installed reversely in the first position by mistake based on a post-installation shape of the first shielding member A600a, thereby preventing the first shielding member A600a from being installed reversely by mistake. Optionally, one of the first fixing member A711 and the first matching member A721 is a hook, and the other one of the first fixing member A711 and the first matching member A721 is a loop. Alternatively, the first fixing member A711 and the first matching member A721 are snap buttons or adhesive buttons matching each other, or a zipper, or magnets. In an embodiment, the first fixing member A711 and the second fixing member A712 are, for example, hooks, and the first matching member A721 and the second matching member A722 are, for example, loops that can engage with the hooks. As shown in FIGS. 18 and 19, a cross-section of the first shielding member A600a is approximately rectangular. Two short edges of the first shielding member A600a are the first edges A605, and two long edges are the second edges A606. The first fixing member A711 and the second fixing member A712 are spaced the pre-determined distance from their respective adjacent first edges A605. Specifically, the ends of the first fixing member A711 and the second fixing member are aligned with their respective adjacent first edges A605 or are located between the two first edges A605. In other embodiments, the first fixing member A711 and the second fixing member A712 may be spaced a first distance from their respective adjacent second edges A606, thus making it difficult for at least one of the first fixing member A711 and the second fixing member A712 to connect with the corresponding first matching member A721 or the corresponding second matching member A722, which is not limited in this application.

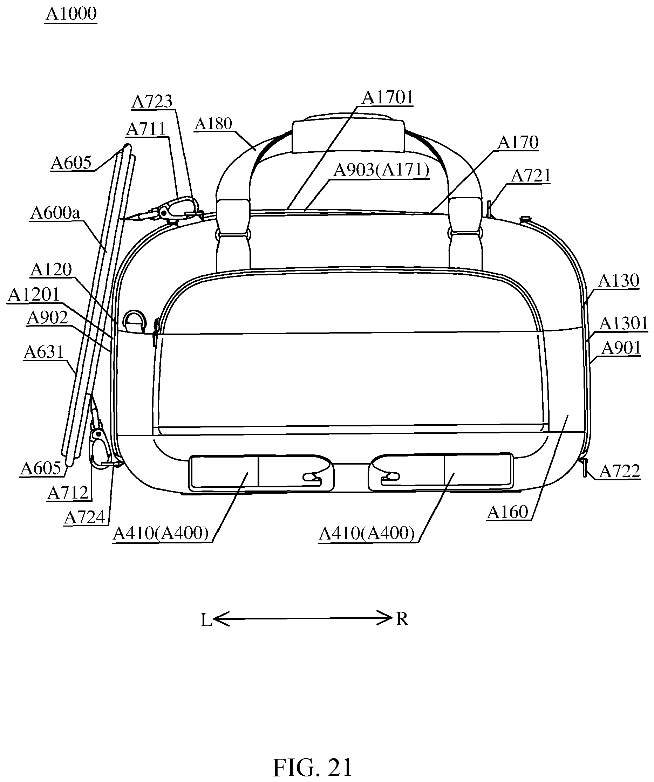

As shown in FIGS. 20 to 21, the first shielding member A600a further has a third position, at which the first shielding member A600a is adapted to shield at least part of another of the multiple side walls of the body A100 (e.g., the left side wall A120 of the body A100). The first shielding member A600a can be selectively positioned in the first position, the second position, or the third position. When the second fixing member A712 connects with the third matching member A723, and when the first fixing member A711 does not connect with the corresponding matching member (i.e., the first fixing member A711 is not connected), the first shielding member A600a can flip between the third position and the second position. Alternatively, the first fixing member A711 is adapted to detachably connect with the third matching member A723. When the first fixing member A711 connects with the third matching member A723, and when the second fixing member A712 does not connect with the corresponding matching member (i.e., the second fixing member A712 is not connected), the first shielding member A600a can flip between the third position and the second position. In an embodiment, the first fixing member A711 and the second fixing member A712 are identical and symmetrically distributed on the first shielding member A600a, and the first shielding member A600a has an axisymmetric structure. In this way, when either of the first fixing member A711 and the second fixing member connects with the third matching member A723, the first shielding member A600a can flip between the second position and the third position.

The fixing mechanism A700 further includes a fourth matching member A724. The fourth matching member A724 is disposed on another of the multiple side walls of the body A100 or on the base A200, and at least one of the first fixing member A711 and the second fixing member A712 is adapted to detachably connect with the fourth matching member A724. The position of the fourth matching member A724 corresponds to the position of the third matching member A723. When the third matching member A723 connects with one of the first fixing member A711 and the second fixing member A712, and the fourth matching member A724 connects with the other one of the first fixing member A711 and the second fixing member A712, and the first shielding member A600a is restrained in the third position. Optionally, the third matching member A723 is located at a side of the top wall viewing area A171, which is adjacent to the left side wall A120, and the fourth matching member A724 is disposed on the left side wall A120 or on a left side surface of the base A200. Alternatively, the third matching member A723 is located at a side of the top wall viewing area A171, which is adjacent to the front side wall A140, and the fourth matching member A724 is disposed on the front side wall A140 or on a front side surface of the base A200. Alternatively, the third matching member A723 is located at a side of the top wall viewing area A171, which is adjacent to the rear side wall A160, and the fourth matching member A724 is disposed on the rear side wall A160 or on a rear side surface of the base A200.

Optionally, the animal carrying device A1000 in this embodiment may include two or more first shielding members A600a. In this way, multiple first shielding members A600a may be selectively installed on the top wall A170 and on at least one of the multiple side walls of the body A100. Thus, the first shielding member A600a can achieve an effect of sunlight shielding and an effect of collision protection.

In the animal carrying device A1000 in this embodiment, the first shielding member A600a may be detachably arranged on the body A100 through the fixing mechanism A700, thereby enabling the first shielding member A600a to switch between the first position and the second position. In this way, not only the need of sunlight shielding or collision protection for the animal carrying device A1000 is met, but also the first shielding member A600a can be removed when not needed, thereby improving the adaptability of the animal carrying device A1000 in different scenarios.

### Embodiment 7

FIG. 23 shows a schematic structural view illustrating the first shielding member A600a installed in the first position according to a seventh embodiment of the present invention. The shielding member in this embodiment differs from the first shielding member A600a in the sixth embodiment at least in the following aspects.

The first protective structure A610 of the first shielding member A600a includes a first protective layer A611, a second protective layer A612, and a third protective layer A613. The third protective layer A613, the second protective layer A612, and the first protective layer A611 are stacked, and the second protective layer A612 is farther from the first side surface A631 than the first protective layer A611. That is, when the first shielding member A600a is installed forward in the first position, the second side surface A632 faces the first opening A1301 (that is, faces the ventilation mesh sheet A901), and the first protective layer A611 is farther from the first opening A 1301 than the second protective layer A612. The first protective layer A611 has better elasticity than the second protective layer A612 and the third protective layer A613. The first protective layer A611 is disposed between the third protective layer A613 and the second protective layer A612.

The material of the first protective layer A611 is foam, such as inert foam. The second protective layer A612 is a plate-like structure, and the material of the second protective layer A612 is selected from at least one of PE, EPP, EPS, or EPO. The third protective layer A613 is also a plate-like structure, and the material is selected from at least one of PE, EPP, EPS, or EPO. In this way, when the buffer zone on the right side wall A130 is impacted, the first protective layer A611 can effectively absorb external impacts, while the second protective layer A612 or the third protective layer A613 can reduce the deformation of the first shielding member A600a, thereby better reducing the deformation of the right side wall A130 under the external impacts. In an embodiment, the second protective layer A612 and the third protective layer A613 may be identical or different.

In another embodiment, when the first shielding member A600a is in the first position, either the first side surface A631 or the second side surface A632 of the first shielding member A600a may face the one of the multiple side walls. Similarly, when the first shielding member A600a is in the third position, either the first side surface A631 or the second side surface A632 of the first shielding member A600a may face the other one of the multiple side walls. That is, the first shielding member A600a in the embodiment can be installed forward or reversely on a corresponding side wall of the body A100. In this way, there is no need to worry about incorrectly installing the first shielding member A600a on any side wall of the body A100 by a user, thereby improving the applicability and usage convenience of the first shielding member A600a.

### Embodiment 8

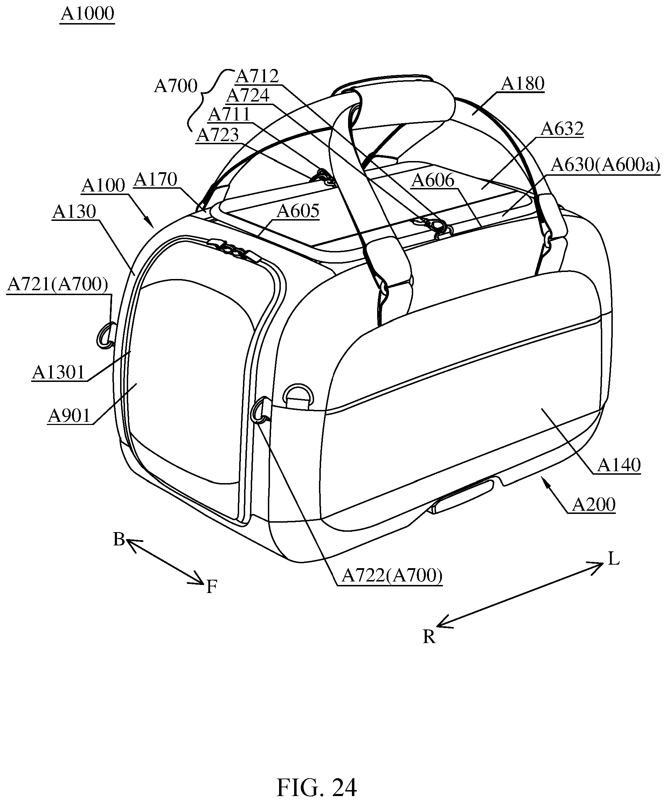

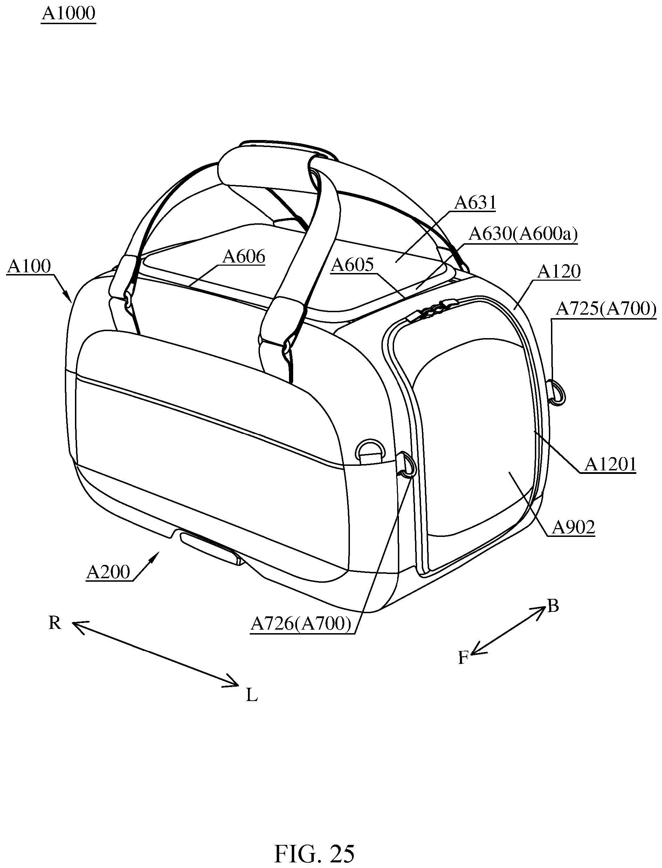

FIGS. 24 and 25 show perspective views of an animal carrying device A1000 according to an eighth embodiment of the present application.

As shown in FIGS. 24 and 25, the animal carrying device A1000 includes the body A100, the base A200, and the first shielding member A600a. For the structures of the body A100 and the base A200, reference may be made to the body A100 and the base A200 in the first embodiment, which will not repeatedly described herein in detail. The animal carrying device A1000 in this embodiment differs from the animal carrying device A1000 in the sixth embodiment at least in the following aspects. In one or more embodiments of the present disclosure, the base A200 may also be regarded as a bottom wall of the body A100.

The fixing mechanism A700 includes the first fixing member A711, the second fixing member A712, the first matching member A721, and the second matching member A722. The first fixing member A711 is disposed on the first shielding member A600a. The second fixing member A712 is disposed on the first shielding member A600a and arranged to be opposite to the first fixing member A711. That is, the first fixing member A711 and the second fixing member A712 are disposed adjacent to the first edges A605 or the second edges A606 of the first shielding member A600a respectively. Exemplarily, the first fixing member A711 and the second fixing member A712 are disposed adjacent to the second edges A606 of the first shielding member A600a respectively. The first matching member A721 and the second matching member A722 are disposed on the body A100 or on the base A200, and the second matching member A722 is disposed opposite to the first matching member A721. Specifically, the first matching member A721 is disposed at a side of the first opening A1301 adjacent to the rear side wall A160, and the second matching member A722 is disposed at a side of the first opening A1301 adjacent to the front side wall A140. The first matching member A721 is adapted to detachably connect with the first fixing member A711, and the second matching member A722 is adapted to detachably connect with the second fixing member A712, thereby restraining the first shielding member A600a in the first position.

Continuing to refer to FIG. 24, the fixing mechanism A700 further includes a third matching member A723 and a fourth matching member A724. The third matching member A723 and the fourth matching member A724 are disposed at opposite sides of the top wall viewing area A171, respectively. Optionally, the third matching member A723 is disposed at a side of the top wall viewing area A171 adjacent to the rear side wall A160, and the fourth matching member A724 is disposed at a side of the top wall viewing area A171 adjacent to the front side wall A140. The third matching member A723 is adapted to detachably connect with the first fixing member A711, and the fourth matching member A724 is adapted to detachably connect with the second fixing member A712, thereby allowing the first shielding member A600a to be restrained in the second position. In an embodiment, the first shielding member A600a further has the third position, in which the first shielding member A600a is adapted to shield at least part of the other one of the multiple side walls of the body A100 (e.g., the left side wall A120). As shown in FIG. 25, the fixing mechanism A700 further includes a fifth matching member A725 and a sixth matching member A726 arranged opposite to each other. Specifically, the fifth matching member A725 is disposed at a side of the second opening A1201 in the left side wall A120 adjacent to the rear side wall A160, and the sixth matching member A726 is disposed at a side of the second opening A1201 adjacent to the front side wall A140. The fifth matching member A725 is adapted to detachably connect with the first fixing member A71 1, and the sixth matching member A726 is adapted to detachably connect with the second fixing member A712, thereby restraining the first shielding member A600a in the third position.

### Embodiment 9

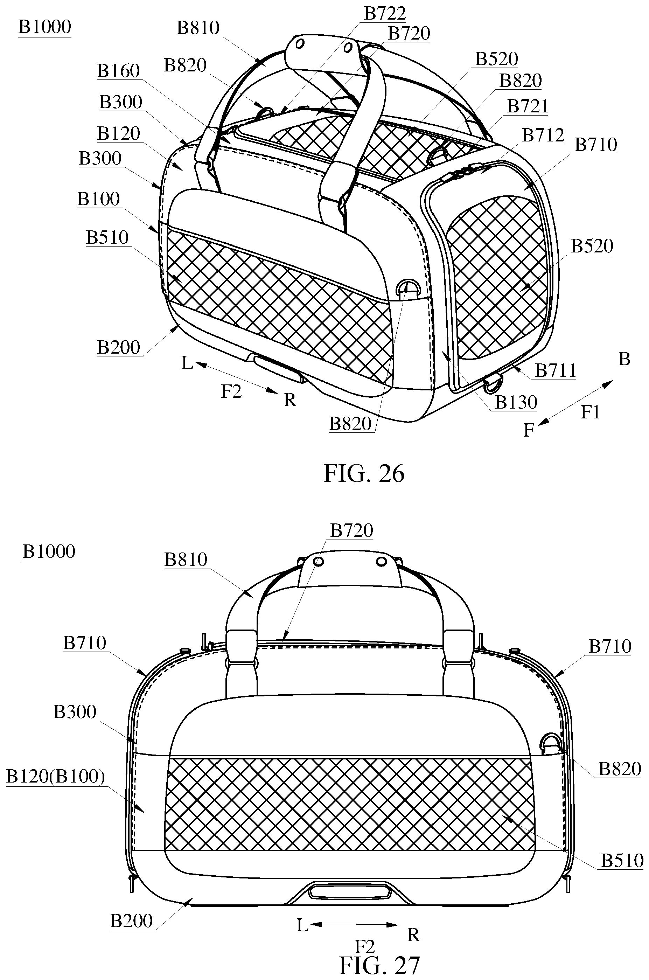

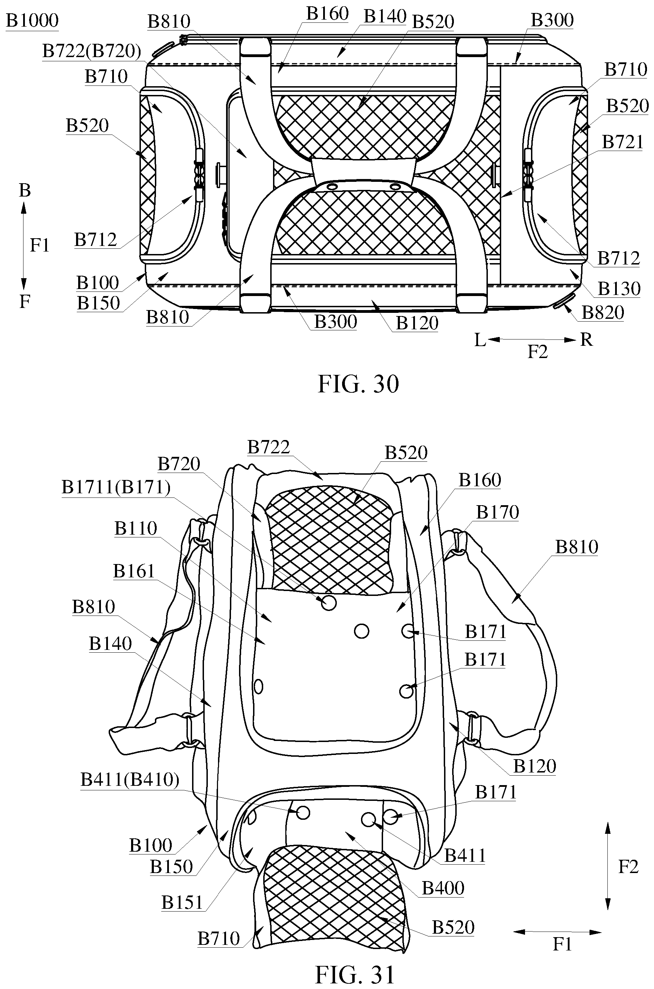

FIGS. 26 to 30 show an animal carrying device B1000 according to a ninth embodiment of the present invention. The animal carrying device B1000 may be, but is not limited to, a sleeping box, a pet box, a pet carrier, or a pet bag, etc. The animal carrying device B1000 has a carrying space B110 (see FIG. 31) for accommodating animals. The animal carrying device B1000 can be fixed to a vehicle seat (not shown) or carried (e.g., held, or slung over a back, etc.) by the user. Specifically, the animal carrying device B1000 may include a base B200 and a body B100, which will be described in detail below together with the description for the animal carrying device B1000.

Referring to FIGS. 26 and 31, in an embodiment, the body B100 is installed on the base B200 and has the carrying space B110. Specifically, the body B100 has a front side wall B120, a right side wall B130, a rear side wall B140, and a left side wall B150 connected sequentially along a circumferential direction. The front side wall B120 and the rear side wall B140 are arranged opposite to each other along a first direction F1 (i.e., a front-rear direction), and the left side wall B150 and the right side wall B130 are arranged opposite to each other along a second direction F2 (i.e., a left-right direction). The front side wall B120 forms a front wall of the carrying space B110, the right side wall B130 forms a right wall of the carrying space B110, the rear side wall B140 forms a rear wall of the carrying space B110, and the left side wall B150 forms a left wall of the carrying space B110. Additionally, the body B100 also has a top wall B160 and a bottom wall B170, and the top wall B160 and the bottom wall B170 are both connected to the front side wall B120, right side wall B130, rear side wall B140, and left side wall B150. The top wall B160 and the bottom wall B170 are arranged opposite to each other approximately along a vertical direction, and the top wall B160 forms a top wall of the carrying space B110, and the bottom wall B170 forms a bottom wall of the carrying space B110.

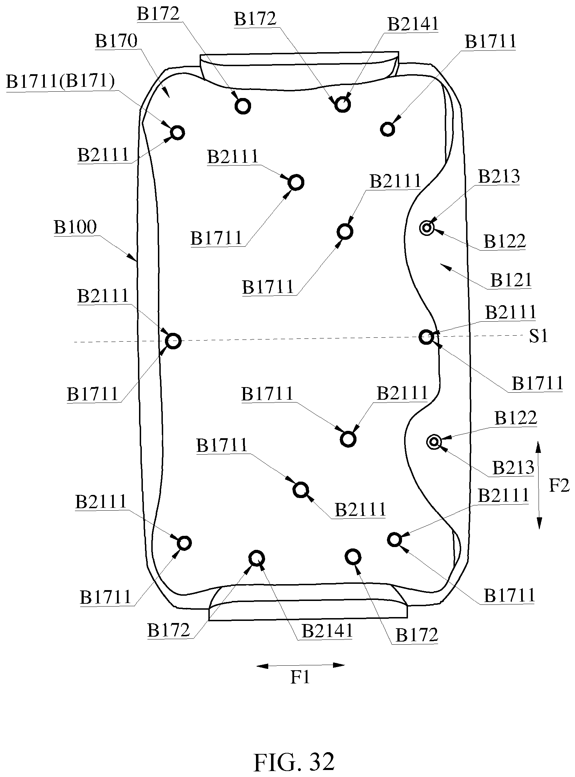

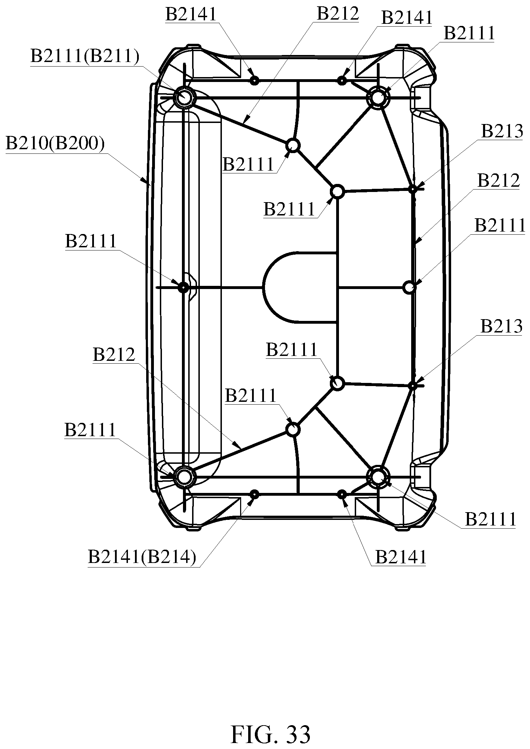

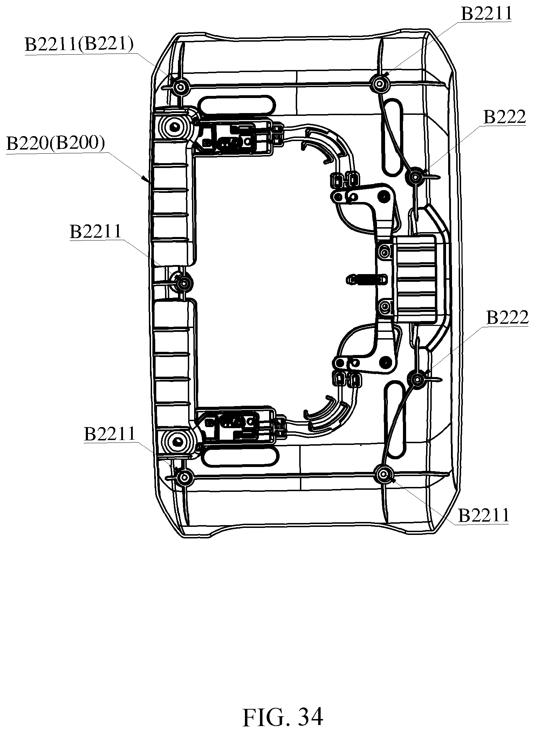

Referring to FIGS. 31 and 32, in an embodiment, a first positioning part B171 is disposed on the bottom wall B170 of the body B100. As shown in FIGS. 33 and 34, the base B200 includes an upper cover B210 and a lower cover B220. One of the upper cover B210 and the lower cover B220 is provided with a limiting part B211, and the other is provided with a second positioning part B221. For example, the upper cover B210 is provided with the limiting part B211, and the lower cover B220 is provided with the second positioning part B221. Alternatively, the upper cover B210 is provided with the second positioning part B221, and the lower cover B220 is provided with the limiting part B211. The upper cover B210 and the lower cover B220 are located at opposite sides of the bottom wall B170 of the body B100, respectively. Specifically, the upper cover B210 is located at a side of the bottom wall B170 facing the carrying space B110, and the lower cover B220 is located at a side of the bottom wall B170 facing away from the carrying space B110. In other words, the upper cover B210 is located inside the carrying space B110, and the lower cover B220 is located outside the carrying space B110.

Specifically, in an embodiment, the upper cover B210 is provided with the limiting part B211, and the lower cover B220 is provided with the second positioning part B221. The limiting part B211 correspond to the first positioning part B171 and the second positioning part B221 respectively, and the limiting part B211 is configured to engage with the first positioning part B171 and the second positioning part B221, so that the bottom wall B170 of the body B100 is sandwiched between the upper cover B210 and the lower cover B220, thereby realizing the positioning of the body B100 and the base B200. It should be noted that after the upper cover B210 and the lower cover B220 are fastened together, the upper cover B210 serves as the bottom wall of the carrying space B110 to support a pet.

Additionally, it should be noted that at least two first positioning parts B171, at least two second positioning parts B221, and at least two limiting parts B211 are arranged, and the first positioning parts B171 each correspond to a corresponding second positioning part B221 and a corresponding limiting part B211. In an embodiment, the numbers of the first positioning parts B171, the second positioning parts B221, and the limiting parts B211 are the same, so that each first positioning part B171 corresponds to one second positioning part B221 and one limiting part B211. Of course, in other embodiments, the respective numbers of the first positioning part B171, the second positioning part B221, and the limiting part B211 may not be exactly the same.

In an embodiment, the first positioning part B171 is a first positioning hole B1711 (see FIGS. 31 and 32), the second positioning part B221 is a second positioning hole B2211 (see FIG. 34), and the limiting part B211 is a positioning column B2111 (see FIG. 33). When the body B100 needs to be installed on the base B200, each positioning column B2111 is configured to pass through a corresponding first positioning hole B1711 and a corresponding second positioning hole B2211 to achieve a precise alignment between the body B100 and the base B200 (see FIG. 32). Specifically, during an installation, the upper cover B210 may be placed into the carrying space B110 first, and it should be ensured that each positioning column B2111 accurately passes through the corresponding first positioning hole B1711 on the bottom wall B170 of the body B100. In this way, the positioning column B2111 protrudes downwards from the bottom wall B170 of the body B100, so that the bottom wall B170 of the body B100 keeps fixed relative to the upper cover B210. In other words, the limiting effect of the upper cover B210 on the bottom wall B170 of the body B100 prevents a relative movement therebetween. Then, the positioning columns B2111 are inserted into corresponding second positioning holes B2211 of the lower cover B220, thereby completing a precise alignment between the upper cover B210 and the lower cover B220. Of course, in other embodiments, after the upper cover B210 and the bottom wall B170 of the body B100 are assembled, i.e., after the positioning columns B2111 pass through the corresponding first positioning holes B1711 in the bottom wall B170 of the body B100, the body B100 and the upper cover B210 can be turned upside down. Then, the lower cover B220 is turned over, so that the second positioning holes B2211 on the lower cover B220 are aligned with the positioning columns B2111 protruding from the surface of the bottom wall B170 of the body B100. Finally, the lower cover B200 is fastened to the upper cover B210. In this way, the bottom wall B170 of the body B100 is sandwiched between the upper cover B210 and the lower cover B220, thereby completing the precise alignment between the upper cover B210 and the lower cover B220.

The animal carrying device B1000 provided in this embodiment adopts a design that the body B100 and the base B200 are positioned through engagement thereof, thus providing a fast and stable assembly manner. Specifically, the body B100 and the base B200 achieve a rapid and precise alignment and fixation through the engagement of the limiting parts B211 and the first positioning parts B171 and the second positioning parts B221, thereby realizing a fast installation of the body B100 and the base B200. Such a design not only simplifies the assembly process, but also improves the assembly accuracy and assembly efficiency.

In an embodiment, after the positioning column B2111 passes through the first positioning hole B1711 and the second positioning hole B2211 in sequence, the bottom wall B170 of the body B100 is sandwiched between the upper cover B210 and the lower cover B220. The upper cover B210 and the lower cover B220 may be connected by a fastener (not shown), such as a screw or a bolt. Of course, in other embodiments, the fastener may be not provided. The upper cover B210 and the lower cover B220 may be provided with a first engaging portion (not shown) and a second engaging portion (not shown) that can engage with each other, respectively, thereby achieving a fixed connection between the upper cover B210 and the lower cover B220. One of the first engaging portion and the second engaging portion may be located on the positioning column B2111, and the other may be located inside the second positioning hole B2211. Alternatively, the first engaging portion and the second engaging portion may be disposed at other positions on the upper cover B210 and on the lower cover B220, respectively.

Referring to FIGS. 32 to 34, in an embodiment, the positions of the positioning columns B2111 arranged on the upper cover B210, the positions of the first positioning holes B1711 distributed on the bottom wall B170 of the body B100, and the positions of the second positioning holes B2211 arranged on the lower cover B220 correspond to each other. The positions of the first positioning holes B1711 on the bottom wall B170 of the body B100 are briefly described herein as an example. Specifically, in an embodiment, as shown in FIG. 32, the bottom wall B170 of the body B100 is approximately rectangular, and multiple first positioning holes B1711 are arranged along the circumferential direction of the bottom wall B170 at intervals. Additionally, at least one first positioning hole B1711 may be disposed in the central area of the bottom wall B170 of the body B100 as needed. More specifically, a line extending along the first direction F1 and passing through the geometric center of the body B100 (which can also be regarded as the center of the bottom wall B170 of the body B100) is defined as a reference straight line S1. All first positioning holes B1711 on the bottom wall B170 of the body B100 are approximately symmetrically arranged relative to the reference straight line S1. In other words, the first positioning holes B1711 at both sides of the reference straight line S1 are mirror-symmetrical in terms of quantity and position, which helps improve the stability of the fastening between the upper cover B210 and the lower cover B220. Of course, in other embodiments, the first positioning holes B1711 at both sides of the reference straight line S1 may differ from each other in quantity and position. For example, the number of first positioning holes B1711 at one side of the reference straight line S1 may be greater or less than the number of the first positioning holes B1711 at the other side.

In an embodiment, for the positioning columns B2111 on the upper cover B210, as shown in FIG. 33, reinforcing ribs B212 are connected between the positioning columns B2111, thereby enhancing the structural strength of each positioning column B2111, and further improving the structural strength of the base B200.

In an embodiment, the front side wall B120, the right side wall B130, the rear side wall B140, the left side wall B150, the bottom wall B170, and the top wall B160 may be connected by sewing, etc. Of course, in other embodiments, the front side wall B120, the right side wall B130, the rear side wall B140, the left side wall B150, the bottom wall B170, and the top wall B160 may be integrally formed. Alternatively, in other embodiments, some parts of the front side wall B120, the right side wall B130, the rear side wall B140, the left side wall B150, the bottom wall B170, and the top wall B160 may be connected by sewing, while the remaining parts thereof may be integrally formed. For example, in an embodiment, as shown in FIGS. 26 and 31, the left side wall B150 and the top wall B160 are integrally formed, while the other parts of the body B100 are connected by sewing.

In an embodiment, the upper cover B210 and the lower cover B220 of the base B200 are made of hard materials (such as plastic), thus supporting the body B100. The body B100 (i.e., the front side wall B120, the right side wall B130, the left side wall B150, the rear side wall B140, the top wall B160, and the bottom wall B170) is made of soft fabric sheets, thus improving the comfort of a pet leaning against the side walls of the carrying space B110.

To enhance the support strength of the body B100 and avoid a deformation of the carrying space B110, in an embodiment, as shown in FIGS. 26 to 31, outer edges of the front side wall B120 and/or the rear side wall B140 of the body B100 away from the base B200 are provided with supporting members B300. Specifically, the outer edges of the front side wall B120 and the rear side wall B140 of the body B100 away from the base B200 are all provided with supporting members B300. The supporting member B300 may be, for example, a support wire, which can support the front side wall B120 and the rear side wall B140, thereby maintaining the shape of the carrying space B110 and improving an aesthetic appearance of the body B100. Additionally, to avoid an exposure of the supporting member B300, which may affect the appearance of the animal carrying device B1000, in an embodiment, the two support wires are located inside the front side wall B120 and the rear side wall B140, respectively. It should be noted that to clearly show the position of the support wires, dashed lines are used in the figures to indicate the specific positions of the support wires inside the front side wall B120 of the body B100 or inside the rear side wall B140 of the body B100.

Referring to FIGS. 31 to 33, in an embodiment, the bottom wall B170 of the body B100 is provided with a reinforcing member B400, and the reinforcing member B400 is made of hard materials and has a plate-like structure. For example, the reinforcing member B400 is a PE board, an EPP board, or an EPS board. The reinforcing member B400 is pre-fixed to the bottom wall B170 of the body B100 by sewing. Specifically, one of the reinforcing member B400 and the upper cover B210 is provided with a first connecting part B214, and the other is provided with a second connecting part B410. The number of the first connecting parts B214 is the same as that of the second connecting parts B410, and the positions of the first connecting parts B214 and the positions of the second connecting parts B410 correspond to each other. More specifically, the upper cover B210 is provided with the first connecting part B214, which may be a connecting column B2141, and the reinforcing member B400 is provided with the second connecting part B410, which may be a connecting hole B411. After the connecting column B2141 passes through the connecting hole B411, a fastener (not shown) may pass through a through hole B172 in the bottom wall B170 of the body B100 to connect the upper cover B210 and the reinforcing member B400, thereby increasing the connection strength between the bottom wall B170 of the body B100 and the base B200.

In an embodiment, at least two reinforcing members B400 are provided. Specifically, two reinforcing members B400 are provided, and the two reinforcing members B400 are disposed on the bottom wall B170 of the body B100 at an interval and arranged opposite to each other along the second direction F2.

Referring to FIGS. 32 to 34, in an embodiment, at least one of the front side wall B120 and the rear side wall B140 extends toward the bottom wall B170 of the body B100 to form an extended edge B121. Specifically, in an embodiment, the front side wall B120 extends toward the bottom wall B170 of the body B100 to form the extended edge B121. One of the extended edge B121 and the upper cover B210 is provided with a limiting column B213, and the other is provided with a first limiting hole B122. For example, the extended edge B121 is provided with the first limiting hole B122, and the upper cover B210 is provided with the limiting column B213. The first limiting hole B122 is configured to be sleeved outside the limiting column B213, so that when the body B100 is installed on the base B200, the front side wall B120 is tightened, thus making the appearance of the body B100 more upright. Alternatively, the extended edge B121 is provided with the limiting column B213, and the upper cover B210 is provided with the first limiting hole B122. The limiting column B213 is configured to be inserted into the first limiting hole B122 to tighten the front side wall B120, thus making the appearance of the body B100 more upright. To prevent the limiting column B213 from disengaging from the first limiting hole B122 after the upper cover B210 and the lower cover B220 are fastened together, which may cause the front side wall B120 to loosen, the lower cover B220 is correspondingly provided with a second limiting hole B222, and when the upper cover B210 and the lower cover B220 are fastened together, the limiting column B213 can be inserted into the second limiting hole B222 to prevent the extended edge B121 from disengaging from the limiting column B213.

To improve ventilation inside the carrying space B110, in an embodiment, at least part of the front side wall B120 and/or the rear side wall B140 of the body B100 forms a first hollowed-out area, and the first hollowed-out area is covered with a first ventilation mesh sheet B510. For example, as shown in FIGS. 26 and 27, at least part of the front side wall B120 of the body B100 forms the first hollowed-out area. Alternatively, at least part of the rear side wall B140 of the body B100 forms the first hollowed-out area. Alternatively, at least part of the front side wall B120 and at least part of the rear side wall B140 of the body B100 are both provided with the first hollowed-out areas. In this way, it is ensured that the carrying space B110 is enclosed while the ventilation in the carrying space B110 is improved, thereby improving the environment where the pet is located and enhancing the comfort of the pet.

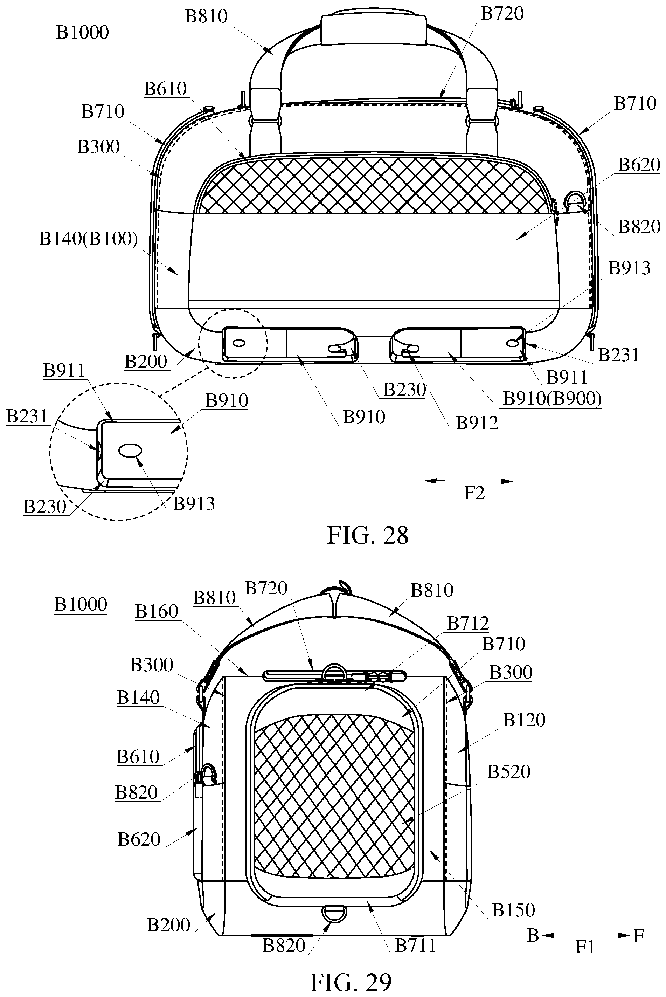

In an embodiment, at least one of the front side wall B120 and the rear side wall B140 of the body B100 is further provided with a pocket B610, and a user can place items (such as garbage bags, water cups, or tissues) in the pocket B610. The opening of the pocket B610 may be open, or may be closed by means of a zipper, a pair of magnets, a pair of snap buttons, or a pair of adhesive buttons. Specifically, the size and number of the pockets B610 are not limited in this embodiment. For example, the rear side wall B140 of the body B100 is provided with two pockets B610, which may be arranged side by side horizontally or staggered horizontally. Alternatively, the two pockets B610 can be arranged side by side vertically or staggered vertically. More specifically, in an embodiment, as shown in FIG. 28, the rear side wall B140 of the body B100 is provided with one pocket B610, and an outer surface of the pocket B610 is mesh-structured, thus increasing transparency and ventilation of the pocket B610.

Continuing to refer to FIG. 28, the rear side wall B140 of the body B100 is provided with a connecting fabric B620, and a passage is formed between the connecting fabric B620 and the rear side wall B140 and configured for allowing items such as a pull rod of a suitcase to pass through, thus improving the portability of the animal carrying device B1000. Specifically, the passage passes through along a direction perpendicular to the base B200, that is, the passage passes through vertically. Specifically, the left and right ends of the connecting fabric B620 are fixed to the side wall of the rear side wall B140 of the body B100 by sewing. In an embodiment, the connecting fabric B620 is a multi-layer fabric structure, and the pocket B610 may be formed between multiple fabric layers.

Referring to FIG. 26 and FIGS. 29 to 31, in an embodiment, the animal carrying device B1000 further includes a side cover B710. Specifically, at least one of the left side wall B150 and the right side wall B130 of the body B100 is provided with a side opening B151. The side cover B710 is movably disposed at the side opening B151, so that the side cover B710 has a first open position (see FIG. 31) and a first closed position (see FIG. 26). When the side cover B710 is in the first open position, the side opening B151 is exposed, and when the side cover B710 is in the first closed position, the side cover B710 covers the side opening B151. Therefore, when the user needs to place a pet into the carrying space B110 or take the pet out from the body B100, the side cover B710 can be kept in the first open position. When the user needs to confine the pet within the carrying space B110, the side cover B710 can be kept in the first closed position. Specifically, in an embodiment, both the left side wall B150 and the right side wall B130 of the body B100 are provided with side openings B151, and each side opening B151 is covered with a side cover B710. In this way, the user can place the pet into the body B100 or take the pet out from the body B100 through a side opening B151 at any side.

Referring to FIGS. 26, 29, and 31, in an embodiment, one end of the side cover B710 is movably connected to the body B100 and serves as a first pivot end B711, thus allowing the side cover B710 to switch between the first open position and the first closed position by rounding the first pivot end B711. The connection manners between the first pivot end B711 and the body B100 includes, but are not limited to the following manners: for example, the first pivot end B711 may be connected to the body B100 by sewing, etc.; or the first pivot end B711 may be connected to the body B100 by welding, or bonding, etc.; or the first pivot end B711 may be connected to the body B100 by means of a zipper, buttons, or other matching components. Specifically, in an embodiment, the first pivot end B711 is sewn to the body B100, and the periphery of the side cover B710, excluding the first pivot end B711, is connected to the body B100 by a zipper, so that the side covers B710 are openably and closably arranged on the left side wall B150 and the right side wall B130 of the body B100, thereby allowing the opening or closing of the carrying space B110.

Continuing to refer to FIGS. 26, 29, and 31, in an embodiment, an end of the side cover B710 away from the first pivot end B711 is referred to as a first movable end B712. When the side cover B710 is in the first closed position, the first movable end B712 and the first pivot end B711 are located at opposite sides of the side opening B151, respectively, thereby closing the side opening B151. Specifically, the first movable end B712 is provided with a first locking member (not shown), and the first pivot end B711 is provided with a first matching member (not shown). When the side cover B710 is in the first open position, the first locking member engages with the first matching member to keep the side cover B710 in the first open position, thus keeping the side opening B151 open, and allowing the pet to freely enter or exit the body B100 as needed. What's more, when the user needs to place the pet into the body B100, there is no need to fold the side cover B710 again to expose the side opening B151, thereby improving the convenience of using the animal carrying device B1000.

In an embodiment, the first locking member and the first matching member may be a pair of magnets, a pair of snap buttons, or a pair of adhesive buttons matching each other. Optionally, the first locking member and the first matching member may be located on the inner surface (i.e., the surface facing the carrying space B110) of the side cover B710, or on the outer surface (i.e., the surface facing away from the carrying space B110) of the side cover B710. Alternatively, when the first locking member and the first matching member are a pair of magnets, they may be located inside the side cover B710.

To further improve the convenience of using the animal carrying device B1000, in an embodiment, as shown in FIGS. 26, 30, and 31, the animal carrying device B1000 further includes a top cover B720. Specifically, the top wall B160 of the body B100 has a top opening B161, and the top cover B720 is movably disposed at the top opening B161, thus allowing the top cover B720 to have a second open position (see FIG. 31) and a second closed position (see FIG. 26). When the top cover B720 is in the second open position, the top opening B161 is exposed, and when the top cover B720 is in the second closed position, the top cover B720 covers the top opening B161. Therefore, when the user needs to place a pet into the carrying space B110 or take the pet out from the body B100, the top cover B720 can be kept in the second open position, and when the user needs to confine the pet within the carrying space B110, the top cover B720 can be kept in the second closed position. In this way, the user can place the pet into the body B100 or take the pet out from the body B100 through any one of the top opening B161 and the side openings B151 as needed.

Referring to FIGS. 30 and 31, in an embodiment, one end of the top cover B720 is movably connected to the body B100 and serves as a second pivot end B721, thus allowing the top cover B720 to switch between the second open position and the second closed position by rounding the second pivot end B721. The connection manners between the second pivot end B721 and the body B100 includes, but are not limited to the following manners: for example, the second pivot end B721 may be connected to the body B100 by sewing, etc.; or the second pivot end B721 may be connected to the body B100 by welding, or bonding, etc.; or the second pivot end B721 may be connected to the body B100 by means of a zipper, buttons, or other matching components. Specifically, in an embodiment, the second pivot end B721 is sewn to the body B100, and the periphery of the top cover B720, excluding the second pivot end B721, is connected to the body B100 by a zipper, so that the top cover B720 is openably and closably arranged on the top wall B160 of the body B100, thereby allowing the opening or closing of the carrying space B110.

Continuing to refer to FIGS. 30 and 31, in an embodiment, an end of the top cover B720 away from the second pivot end B721 is referred to as a second movable end B722. When the top cover B720 is in the second closed position, the second pivot end B721 and the second movable end B722 are located at opposite sides of the top opening B161, respectively, thereby closing the top opening B161. Specifically, the second movable end B722 is provided with a second locking member (not shown), and the second pivot end B721 is provided with a second matching member (not shown). When the top cover B720 is in the second open position, the second locking member engages with the second matching member to keep the top cover B720 in the second open position, thereby keeping the top opening B161 open, and allowing the pet to freely enter or exit the body B100 as needed. What's more, when the user needs to place the pet into the body B100, there is no need to fold the top cover B720 again to expose the top opening B161, thereby improving the convenience of using the animal carrying device B1000.

In an embodiment, the second locking member and the second matching member can be the same as the first locking member and the first matching member respectively, and may be a pair of magnets, a pair of snap buttons, or a pair of adhesive buttons matching each other. Optionally, the second locking member and the second matching member may be located on the inner surface (i.e., the surface facing the carrying space B110) of the top cover B720, or may be located on the outer surface (i.e., the surface facing away from the carrying space B110) of the top cover B720. Alternatively, when the second locking member and the second matching member are a pair of magnets, they may be located inside the top cover B720.

To improve the comfort of the pet inside the carrying space B110, in an embodiment, as shown in FIG. 26, at least part of the side cover B710 and/or the top cover B720 forms a second hollowed-out area, and the second hollowed-out area is covered with a second ventilation mesh sheet B520, thereby improving the ventilation of the carrying space B110 inside the animal carrying device B1000. Specifically, in an embodiment, at least a portion of the top cover B720 and at least a portion of the side cover B710 are provided with the second hollowed-out areas respectively. Of course, in other embodiments, the entire top cover B720 and the entire side cover B710 may be the second hollowed-out areas, in other words, two second ventilation mesh sheets B520 form the side cover B710 and the top cover B720, respectively.

As shown in FIGS. 26 and 27, the animal carrying device B1000 is provided with a handle B810, thus allowing a user to conveniently carry the animal carrying device B1000. It should be noted that the number and position of the handle B810 are not limited in this embodiment. For example, there may be one, two, or more handles B810, and the handle B810 may be located on the top wall B160 or a side wall (such as the front side wall B120, the rear side wall B140, the left side wall B150, or the right side wall B130) of the body B100. Specifically, when there is one handle B810, it is approximately located in the middle of the top wall B160 of the body B100. When there are two handles B810, they may be fixed on the front side wall B120 and the rear side wall B140, respectively, or fixed on the left side wall B150 and the right side wall B130, respectively.

As shown in FIG. 26, to facilitate carrying the animal carrying device B1000, the animal carrying device B1000 is further provided with two (but not limited to two) buckles B820, which are configured to detachably connect with a crossbody strap. The two buckles B820 are disposed on two opposite side walls of the body B100, respectively, such as the front side wall B120 and the rear side wall B140. The two buckles B820 are distributed along a diagonal of the body B100.

Referring to FIG. 28, in an embodiment, the animal carrying device B1000 is provided with an anchoring assembly B900. The anchoring assembly B900 is adapted to be connected to a vehicle seat to fix the animal carrying device B1000 to the vehicle seat. The anchoring assembly B900 includes at least one ISOFIX connector B910. One end (i.e., a pivot end B911) of at least one ISOFIX connector B910 is pivotally connected to the base B200, and the other end (i.e., a free end B912) is configured to connect with at least one connection point on the vehicle seat, thus allowing the ISOFIX connector B910 to have an unfolded state (not shown) and a folded state (see FIG. 28). Specifically, when the animal carrying device B1000 needs to be fixed to the vehicle seat, the ISOFIX connector B910 can be rotated around the pivot end B911 thereof to the unfolded state, thereby fixedly connecting with the connection point on the vehicle seat. When the animal carrying device B1000 needs to be carried by hand, the ISOFIX connector B910 can be rotated around the pivot end B911 thereof to the folded state, thereby reducing a volume of the animal carrying device B100 and preventing the ISOFIX connector B910 from accidentally hitting pedestrians or other objects during a movement.

In an embodiment, the base B200 is provided with at least one folding groove B230. When the ISOFIX connector B910 is in the folded state, it is received in the folding groove B230. In an embodiment, when the ISOFIX connector B910 is in the folded state, a convex member B913 is disposed on a side wall of the ISOFIX connector B910 facing away from the folding groove B230. Specifically, an abutting convex member B231 is provided on a side wall of the folding groove B230, which is adjacent to the pivot end B911 and faces the second direction F2. When the ISOFIX connector B910 is in the unfolded state, the abutting convex member B231 and the convex member B913 are opposite to each other along the second direction F2 and abut against each other, thereby preventing the ISOFIX connector B910, when unfolded, from directly colliding with the side wall of the folding groove B230, and improving the service life of the animal carrying device B1000. Specifically, the abutting convex member B231 and the convex member B913 may be made of wear-resistant material, such as metal, rubber, or silicone.

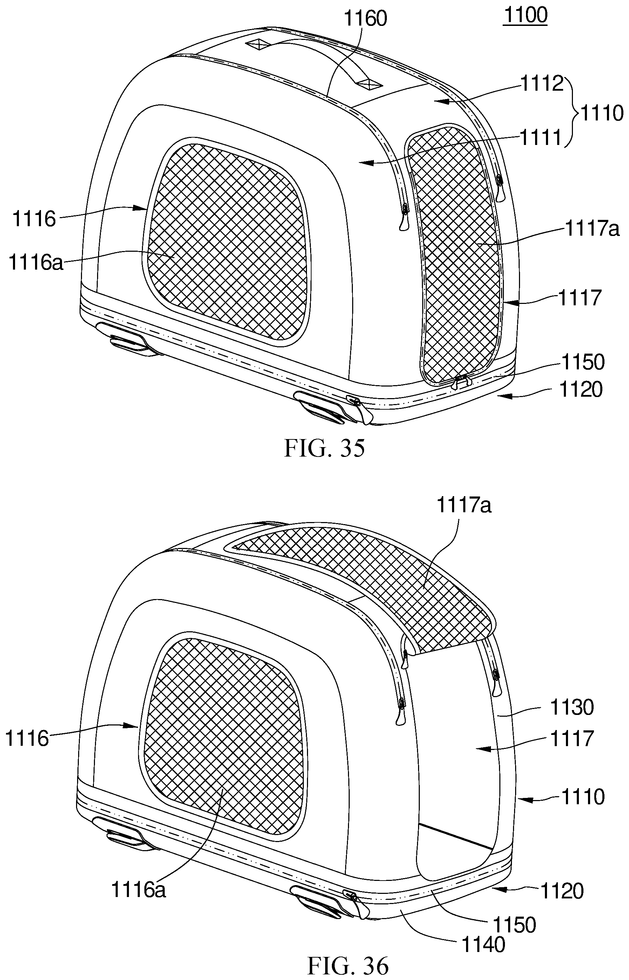

FIG. 35 shows a perspective view of a carrier 1100 according to a tenth embodiment of the present disclosure, and FIG. 36 shows another perspective view of the carrier 1100 shown in FIG. 35, where part of the second closing member 1117a is separated from the body 1110.

Referring to FIGS. 35 and 36, the tenth embodiment of the present disclosure provides an animal carrying device (also referred to as a carrier 1100). The carrier 1100 can be fixed to a vehicle seat, for example, through a fixing strap assembly (not shown).

It should be noted that the terms "front," "rear," "left," and "right" in this embodiment are based on the orientation of the carrier (as indicated by a reference sign "1100") when placed on the vehicle seat. Specifically, the "front" direction refers to a direction in which the carrier faces away from a backrest of the vehicle seat, which is also the direction of vehicle travel in this embodiment. The "rear" direction refers to a direction in which the carrier 1100 faces or abuts against the backrest of the vehicle seat, while the "left" and "right" directions refer to two lateral directions when viewed from the front of the carrier 1100.

Specifically, the carrier 1100 includes a box body 1110 (referred to as the "body" hereinafter) and a bottom support member 1120. The bottom support member 1120 is detachably connected to the body 1110, thus, together with the body 1110, forming a box body providing an accommodation space. The body 1110 constitutes four side walls and a top wall of the carrier 1100, and the bottom support member 1120 constitutes the bottom of the box. In an example, the body 1110 may be detachably connected to the bottom support member 1120 through at least one first connecting assembly 1150. The first connecting assembly 1150 may include a first connector on the body 1110 and a second connector on the bottom support member 1120, and may be detachable matching structures, such as zipper structures, snap-fit structures, slide buckles, adhesive buttons, or hook-and-loop fasteners, etc.

The body 1110 may include a first support member and a second support member, and the first support member and the second support member are at least partially and detachably connected to each other, that is, at least a portion of the first support member is detachably connected to the second support member. In an embodiment, the first support member may be a side support member 1111, and the second support member may be an upper support member 1112. The side support member 1111 forms two side walls of the body 1110, such as the front and rear side walls. The upper support member 1112 forms the top wall and at least part of the other two side walls (e.g., the left and right side walls) of the body 1110. As shown in FIG. 35, at least a portion of the side support member 1111 can be detachably connected to the upper support member 1112 through a second connecting assembly 1160. The second connecting assembly 1160 may include matching structures disposed on the side support member 1111 and the upper support member 1112 respectively, such as mutually matching zipper structures, snap-fit structures, slide buckles, adhesive buttons, or hook-and-loop fasteners, etc., and optionally, flexible connecting structures are used, but the present disclosure is not limited thereto.

As shown in FIGS. 35 and 36, one or more side walls of the body 1110 may have windows for observing the interior of the carrier 1100 and/or allowing a pet to enter or exit the carrier 1100. In an embodiment, the windows include a first window 1116 and/or a second window 1117. The first window 1116 is disposed in the side support member 1111. The second window 1117 is disposed in at least the upper support member 1112, for example, in a portion of the upper support member 1112 that forms the left and/or right side walls of the body 1110. Optionally, the second window 1117 may also extend from the upper support member 1112 to pass through part of the bottom support member 1120.

In an embodiment, the first windows 1116 may be disposed in the front and rear side walls of the body 1110 (i.e., corresponding to the two side support members 1111 of the body 1110), respectively. The two first windows 1116 may be correspondingly arranged, for example, may be disposed in the central positions of the corresponding side support members 1111, respectively. Each first window 1116 may have a trapezoidal shape, which is not limited in the present disclosure, and may also have a rectangular, circular, or oval shape, etc. Optionally, the two first windows 1116 have the same size and/or shape. Alternatively, the two first windows 1116 may have different sizes and/or shapes. For example, the size of the first window 1116 in the rear side wall may be larger than that of the first window 1116 in the front side wall, thus increasing a ventilation area and improving the ventilation of the rear side wall of the carrier 1100 (i.e., a side proximate to or in contact with the vehicle seat backrest). However, the present disclosure is not limited thereto, and the carrier 1100 may have only one first window 1116. For example, when the carrier 1100 is placed on the vehicle seat, the first window 1116 is disposed in the side of the carrier 1100 facing away from the vehicle seat backrest.

Similarly, second windows 1117 opposite to each other may also be disposed in the left and right side walls of the carrier 1100, respectively, and the two second windows 1117 may have the same or different shapes and/or sizes. Alternatively, the carrier 1100 may have only one second window 1117, for example, disposed in the left or right side wall, and more specifically, in the side of the carrier 1100 proximate to a vehicle door.

Furthermore, the first window 1116 may be provided with a first closing member 1116a for closing and/or covering the first window 1116. In an embodiment, the first closing member 1116a may be a cover that is at least partially detachably connected to or fixedly connected to the first window 1116. In an embodiment, the first closing member 1116a may be made of transparent and/or ventilation materials, such as a mesh structure.

Optionally or additionally, the second window 1117 may be provided with a second closing member 1117a for closing and/or covering the second window 1117. In an embodiment, at least part of the second closing member 1117a is detachably connected to the body 1110. For example, as shown in FIG. 36, an upper end of the second closing member 1117a may be fixedly connected to the body 1110, while other portions are detachably connected to the body 1110, thus allowing the second closing member 1117a to be opened upward relative to the second window 1117, that is, the second closing member 1117a can be lifted up to facilitate pet entry and exit. In an example, the second closing member 1117a may be made of transparent and/or ventilation material or light-blocking material. The second closing member 1117a may be made of flexible or rigid material and detachably connected to the second window 1117 through a flexible or rigid connecting structure. For example, the second closing member 1117a is a ventilation mesh fabric or flexible mesh material.

Additionally, as shown in FIG. 36, a cover is arranged to fit over the body 1110 and/or the bottom support member 1120 of the carrier 1100, and the cover may include at least one of fabric, plastic, or PE, but the present disclosure is not limited thereto. For example, the cover may include a body cover 1130 covering the exterior of the body 1110 and a bottom cover 1140 covering the exterior of the bottom support member 1120. The body cover 1130 and the bottom cover 1140 are detachably connected, for example, through the first connecting assembly 1150 (such as zipper structures, adhesive buttons, or hook-and-loop fasteners, etc.). In a specific embodiment, at least part of the first closing member 1116a and/or at least part of the second closing member 1117a may be fixedly connected to the cover, or may be integrally formed together with the cover (e.g., made of the same material as the cover). The present disclosure is not limited to the above embodiments, and the materials and/or connection manners of the first closing member and/or the second closing member may be interchanged or modified.

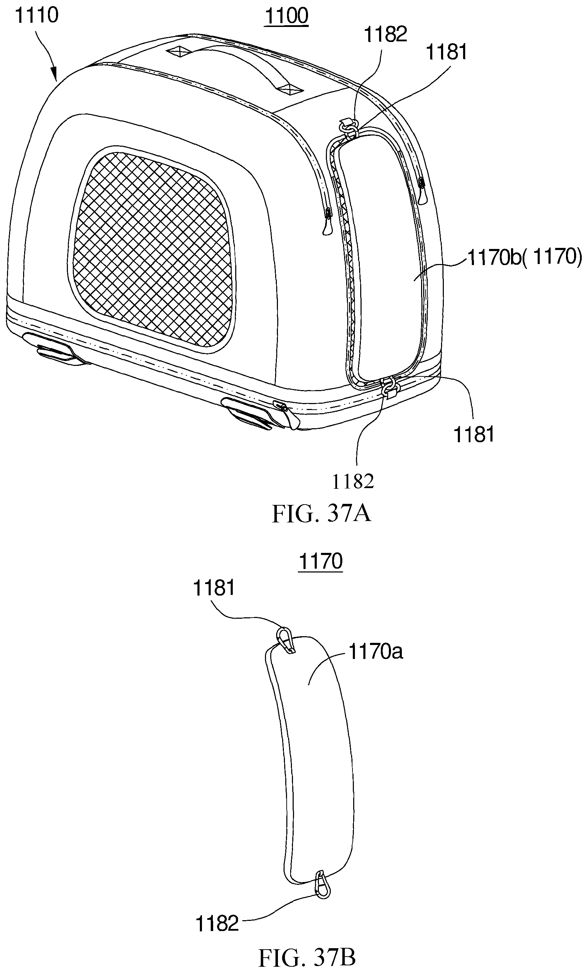

FIG. 37A shows another perspective view of the carrier 1100 according to the tenth embodiment of the present disclosure, where the carrier 1100 is provided with an anti-collision protection member 1170, which is also referred to as a side impact protection block or anti-collision material. FIG. 37B shows another side of the anti-collision protection member 1170 shown in FIG. 37A.

As shown in FIGS. 37A and 37B, the body 1110 may be further provided with the anti-collision protection member 1170. The anti-collision protection member 1170 may have a certain thickness, and may be installed on any side of the body 1110 to enhance the safety of a pet inside the carrier 1100. The anti-collision protection member 1170 may be installed on any one or more sides of the body 1110. Optionally, when the carrier 1100 is placed on the vehicle seat, the anti-collision protection member 1170 is at least disposed on a side of the body 1110 proximate to a vehicle door.

In an embodiment, as shown in FIGS. 37A and 37B, the anti-collision protection member 1170 may be a separately formed structure, and may be detachably connected to a side wall of the carrier 1100. For example, a first fixing member 1181 may be disposed on the anti-collision protection member 1170, and correspondingly, a second fixing member 1182 may be disposed on the body 1110. The first fixing member 1181 and the second fixing member 1182 are detachably connected to each other to fix the anti-collision protection member 1170 to the carrier 1100. Specifically, the first fixing member 1181 may be provided on the inner surface 1170a of the anti-collision protection member 1170, and fixed on the inner surface 1170a by, for example, sewing or bonding (see FIG. 37B). When the anti-collision protection member 1170 is connected to the body 1110 through the engagement of the first fixing member 1181 and the second fixing member 1182, the outer surface 1170b of the anti-collision protection member 1170 is exposed, so that the first fixing member 1181 or most structure thereof is hidden or covered, thereby enhancing aesthetics. In an embodiment, one of the first fixing member 1181 and the second fixing member 1182 may be a hook, and the other may be a loop, but the present disclosure is not limited thereto, as long as the anti-collision protection member 1170 can be detachably fixed to the carrier 1100 through the engagement of the first fixing member 1181 and the second fixing member 1182.

Specifically, the anti-collision protection member 1170 may be a buffer body, and the buffer body may be a foam body, a plastic body, or an elastic body. In an example, the buffer body may be constructed as a separately formed buffer block, then is sewn into a bag made of the same material as the cover and detachably fixed to a side wall of the carrier 1100. However, the present disclosure is not limited thereto, and the anti-collision protection member 1170 may also be non-detachably connected to the cover or formed by the cover itself. By providing such an anti-collision protection member 1170, a better buffering effect can be provided for a pet inside the carrier 1100 in the event of an accidental vehicle collision, especially when a side of the carrier 1100 is impacted, thereby protecting the pet better.

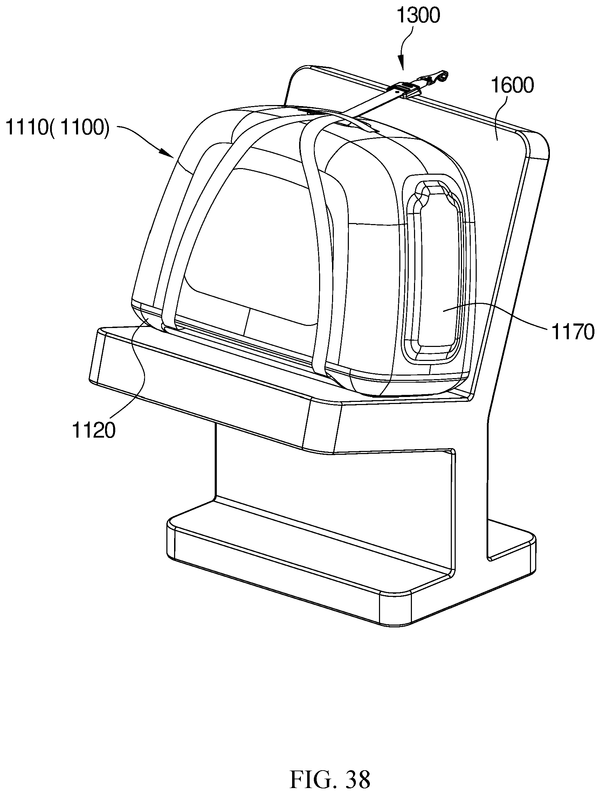

Referring to FIG. 38, an eleventh embodiment of the present disclosure provides a carrier 1100 and a fixing strap assembly 1300 for the carrier 1100. The carrier 1100 can be fixed to a vehicle seat 1600 through an ISOFIX connector (not shown) or through the fixing strap assembly 1300.

As shown in FIG. 38, the fixing strap assembly 1300 of this embodiment is configured to connect with the carrier 1100. Optionally, the fixing strap assembly 1300 is at least partially connected to the carrier 1100 fixedly (for example, in a detachable or non-detachable manner). At least part of the fixing strap assembly 1300 can be received in an accommodation space of the carrier 1100.

Specifically, the carrier 1100 includes a body 1110 and a bottom support member 1120. The bottom support member 1120 is detachably connected to the body 1110, thus, together with the body 1110, forming a box, and providing a space for accommodating a pet or a child. A cover is arranged to fit over the body 1110, and the cover may include at least one of fabric, plastic, or PE, but the present disclosure is not limited thereto. Specifically, the cover may include a body cover covering the exterior of the body 1110 and a bottom cover covering the exterior of the bottom support member 1120. The body cover 1130 and the bottom cover 1140 are detachably connected, for example, through zipper structures, adhesive buttons, or hook-and-loop fasteners, etc., but the present disclosure is not limited thereto.

Additionally, as shown in FIG. 38, the surface of the anti-collision protection member 1170 on the carrier 1100 faces a vehicle door for reducing an impact on the carrier 1100. The anti-collision structure 1170 is at least installed on a side of the carrier 1100 proximate to the vehicle door when the carrier 1100 is placed on the vehicle seat 1600.

The technical features of the embodiments described above can be combined arbitrarily. In order to make the description concise, not all possible combinations of the technical features of the above embodiments are described. However, as long as there is no contradiction in the combinations of these technical features, the combinations should be considered to be within the scope of the specification.

The embodiments above are only several implementation manners of the present invention, and the descriptions thereof are relatively specific and detailed, but cannot be understood as limitations on the scope of the present invention. It should be noted that, for the ordinary skilled in the art, various variations and improvements may be made without departing from the concept of the present invention, and these variations and improvements all belong to the protection scope of the present invention. Therefore, the protection scope of the present invention shall be based on the appended claims.

## Claims

1. An animal carrying device, **characterized by** comprising:
a body having a first wall and a second wall, the second wall having a second opening; and
a shielding member provided with a protective structure, the shielding member being movably connected to the body to allow the shielding member to switch between a first position and a second position;
wherein, when the shielding member is in the first position, the protective structure covers at least part of the first wall; and when the shielding member is in the second position, the shielding member covers at least part of the second opening of the second wall.

2. The animal carrying device according to claim 1, wherein the body is further provided with an anchoring assembly, and the anchoring assembly is adapted to be connected to a vehicle seat to fix the animal carrying device to the vehicle seat; and
when the animal carrying device is fixed to the vehicle seat through the anchoring assembly, the first wall is adapted to face a vehicle door.

3. The animal carrying device according to claim 2, wherein the animal carrying device further comprises a base; the body is installed on the base, and forms a carrying space together with the base; the anchoring assembly is disposed on the base, and the anchoring assembly comprises at least one ISOFIX connection assembly or at least one Latch connection assembly.

4. The animal carrying device according to any one of the preceding claims, wherein the protective structure comprises:
a first protective layer; and
a second protective layer; wherein the second protective layer and the first protective layer are stacked with each other, and elasticity of the material of the first protective layer is higher than elasticity of the material of the second protective layer.

5. The animal carrying device according to claim 4, wherein the first protective layer is made of foam; the second protective layer is a plate-like structure, and the material of the second protective layer is selected from at least one of polyethylene (PE), expanded polypropylene (EPP), expanded polystyrene (EPS), or expanded polyolefin (EPO).

6. The animal carrying device according to claim 4 or 5, wherein the protective structure further comprises a third protective layer stacked with the first protective layer of the protective structure; the first protective layer is disposed between the third protective layer and the second protective layer; the elasticity of the material of the first protective layer is higher than elasticity of the material of the third protective layer; and
the third protective layer is a plate-like structure, and the material of the third protective layer is selected from at least one of PE, EPP, EPS, or EPO.

7. The animal carrying device according to claim 4 or 5, wherein the shielding member comprises a fixed end and a free end; the fixed end is connected to the body and serves as a pivot end to allow the shielding member to flip between the first position and the second position; and
wherein the shielding member is configured that, when the shielding member is in the first position, the second protective layer is closer to the body than the first protective layer, and when the shielding member is in the second position, the first protective layer is closer to the body than the second protective layer.

8. The animal carrying device according to any one of the preceding claims, wherein the first wall is connected to the second wall; and
the shielding member comprises a fixed end and a free end, wherein the fixed end is connected to the first wall or the second wall, and the fixed end serves as a pivot end to allow the shielding member to flip between the first position and the second position.

9. The animal carrying device according to any one of the preceding claims, wherein
the first wall is connected to the second wall; the first wall is a side wall, and the second wall is a top wall;
the first wall has a first opening; the shielding member comprises a fixed end and a free end, and the fixed end is connected to the body at a position between the first opening and the second opening and serves as a pivot end to allow the shielding member to flip between the first position and the second position; and
wherein, when the shielding member is in the first position, the protective structure covers at least part of the first opening, and allows the second opening to be exposed; and when the shielding member is in the second position, the shielding member covers at least part of the second opening, and allows the first opening to be exposed.

10. The animal carrying device according to claim 8 or 9, wherein
the shielding member comprises a shielding fabric cover, the protective structure is disposed inside the shielding fabric cover, and one end of the shielding fabric cover is sewn to the body and serves as the pivot end.

11. The animal carrying device according to claim 8 or 9, wherein a fixing member is disposed on the free end; matching members are disposed on the first wall and on the second wall, respectively; and the matching members are adapted to detachably connect with the fixing member to detachably fix the shielding member in the first position or in the second position.

12. The animal carrying device according to any one of the preceding claims, wherein the animal carrying device further comprises a second shielding member; the shielding member and the second shielding member are connected to opposite sides of the second opening, respectively; the protective structure comprises a protective structure disposed on the shielding member and a second protective structure disposed on the second shielding member;
one end of the second shielding member is connected to the body and serves as a second pivot end to allow the second shielding member to flip between a third position and a fourth position;
when the second shielding member is in the third position, the second protective structure covers at least part of a wall of the body opposite to the first wall; and
when the second shielding member is in the fourth position, the second shielding member covers at least part of the second opening.

13. The animal carrying device according to claim 12, wherein a fixing member is disposed on the shielding member, a matching member is disposed on the second shielding member, and the matching member is adapted to detachably connect with the fixing member; and
when the shielding member is in the second position, and when the second shielding member is in the fourth position, the second shielding member and the shielding member are connected to each other to jointly cover the second opening.

14. The animal carrying device according to claim 12, wherein a fixing member is disposed on the shielding member; a matching member is disposed on the second wall, and the matching member is disposed between the second opening and the second shielding member; and
when the shielding member is in the second position, the fixing member connects with the matching member to allow the shielding member to cover the second opening.

15. The animal carrying device according to any one of claims 1 to 7, wherein the shielding member is detachably connected to the body through a fixing mechanism to allow the shielding member to be selectively arranged in the first position or the second position; and
the fixing mechanism comprises:
a fixing member disposed on the shielding member; and
a matching member disposed on the first wall and/or on the second wall, wherein the matching member is adapted to detachably connect with the fixing member, to detachably fix the shielding member in the first position or in the second position.

16. The animal carrying device according to any one of the preceding claims, wherein:
the first wall and the second wall are opposite to each other; the first wall has a first opening; the shielding member is detachably connected to the first wall and the second wall, to allow the shielding member to switch between the first position and the second position;
wherein, when the shielding member is in the first position, the protective structure covers at least part of the first wall, and allows the second opening to be exposed; and when the shielding member is in the second position, the protective structure covers at least part of the second wall, and allows the first opening to be exposed.

17. The animal carrying device according to any one of claims 11 to 16, wherein:
the fixing member and the matching member are a pair of magnets; or
the fixing member and the matching member are a pair of snap buttons; or
the fixing member and the matching member are a pair of adhesive buttons; or
the fixing member and the matching member respectively comprise a hook and a loop.

18. The animal carrying device according to any one of claims 3 to 17, wherein at least two first positioning parts are disposed on a bottom wall of the body;
the base comprises an upper cover and a lower cover; one of the upper cover and the lower cover is provided with at least two limiting parts, and the other is provided with at least two second positioning parts; each limiting part corresponds to a corresponding first positioning part and a corresponding second positioning part; the upper cover and the lower cover are located at opposite sides of the bottom wall of the body respectively; and each limiting part is configured to engage with the corresponding first positioning part and the corresponding second positioning part to position the body and the base.

19. The animal carrying device according to claim 18, wherein each first positioning part is a first positioning hole, each second positioning part is a second positioning hole, each limiting part is a positioning column; and each positioning column is configured to pass through a corresponding first positioning hole and a corresponding second positioning hole to position the body and the base.

20. The animal carrying device according to any one of claims 18 to 19, wherein the body has a front side wall and a rear side wall; at least one of the front side wall and the rear side wall extends toward the bottom wall of the body to form an extended edge; one of the upper cover and the extended edge is provided with a limiting column, and the other is provided with a first limiting hole; and the limiting column is configured to be inserted into the first limiting hole.

21. The animal carrying device according to any one of claims 18 to 19, wherein the animal carrying device further comprises a side cover, a first locking member, and a first matching member; at least one of the left side wall and the right side wall of the body is provided with a side opening; the side cover is movably disposed at the side opening to allow the side cover to have a first open position and a first closed position; when the side cover is in the first open position, the side opening is exposed; when the side cover is in the first closed position, the side cover covers the side opening; the first locking member and the first matching member are disposed on opposite ends of the side cover respectively; and when the side cover is in the first open position, the first locking member engages with the first matching member to keep the side cover in the first open position.

22. The animal carrying device according to any one of claims 1 to 8, wherein the first wall has a first opening, the first opening is covered with a ventilation mesh sheet, and the ventilation mesh sheet is openably and closably arranged on the first wall through a zipper to allow the first opening to be opened or closed.

23. The animal carrying device according to claim 22, wherein the ventilation mesh sheet has a zipper end provided with a zipper and a sewn end sewn on the first wall; one magnet is disposed at the zipper end of the ventilation mesh sheet, another magnet is disposed at the sewn end on the first wall; and when the zipper end of the ventilation mesh sheet is connected to the sewn end through the magnets, the first opening is kept in an open state.

24. The animal carrying device according to claim 16, wherein matching members on the first wall are disposed at two sides of the first opening, respectively, and fixing members on the shielding member are disposed on two ends of the shielding member, respectively; and
the protective structure is configured to cover the first opening when the shielding member is connected to the first wall through the fixing members.
